# EUROPEAN PATENT APPLICATION

(11) **EP 4 723 348 A1**
(43) Date of publication of application: **08.04.2026**
(21) Application number: 23962924.9
(22) Date of filing: 29.12.2023
(51) Int. Cl.: H01M 50/342

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); LU, Ming, Ningde, Fujian 352100 (CN); GU, Mingguang, Ningde, Fujian 352100 (CN); LIU, Sike, Ningde, Fujian 352100 (CN); LI, Wei, Ningde, Fujian 352100 (CN); LI, Yao, Ningde, Fujian 352100 (CN); GAN, Jiuqiang, Ningde, Fujian 352100 (CN); HUANG, Xiuxue, Ningde, Fujian 352100 (CN); CHEN, Weike, Ningde, Fujian 352100 (CN); LI, Quankun, Ningde, Fujian 352100 (CN)
(74) Representative: Gong, Jinping
(86) International application number: PCT/CN2023/143612
(87) International publication number: WO 2025/138250

(57) **Abstract**

The present application provides a battery cell, a battery, and an electrical apparatus, which belongs to the technical field of batteries. The battery cell includes a shell, the shell has a first wall and a second wall connected to each other, the first wall is provided with a first groove, the first wall is configured to be capable of rupturing along at least a part of the first groove during pressure relief of the battery cell, so as to release the internal pressure of the battery cell, the second wall is located on one side of the first wall in a first direction, the first groove includes a first groove segment, and the first groove segment and the second wall are arranged in the first direction. The first wall is also provided with a second groove, in the first direction, the second wall has a first outer surface facing away from an interior of the shell, and a projection of the second groove in a thickness direction of the first wall is located between the first outer surface and a projection of the first groove segment in the thickness direction of the first wall, so that the second groove can absorb the excess material from extrusion of the first groove segment during a forming process of the first groove segment, so as to alleviate a phenomenon that the battery cell partially arches or planeness of the first wall is reduced.

## Description

### TECHNICAL FIELD

The present application relates to the field of battery technologies, and in particular, to a battery cell, a battery, and an electrical apparatus.

### BACKGROUND

In recent years, new energy vehicles have made a leap forward in development. In the field of electric vehicles, power batteries, as power sources of electric vehicles, play an irreplaceable and important role. With the vigorous promotion of new energy vehicles, the demand for power battery products is also growing. Batteries, as core components of new energy vehicles, have high requirements in terms of use reliability and service life.

In battery technologies, in order to ensure the safety of battery cells, a pressure relief structure for relieving an internal pressure of a battery cell is generally integrated on a shell of the battery cell, so that when the internal pressure or temperature of the battery cell reaches a threshold, the pressure relief structure is capable of being actuated to release the internal pressure of the battery cell. However, the existing battery cells are prone to poor consistency in overall dimensions of the outer shells of the battery cells after fabricating the pressure relief structure, which is not conducive to improving the production quality of the battery cells.

### SUMMARY

Embodiments of the present application provide a battery cell, a battery, and an electrical apparatus, which are capable of effectively improving the production quality of the battery cell.

In a first aspect, an embodiment of the present application provides a battery cell, including a shell, where the shell has a first wall and a second wall connected to each other, the first wall is provided with a first groove, the first wall is configured to be capable of rupturing along at least a part of the first groove during pressure relief of the battery cell, so as to release the internal pressure of the battery cell, the second wall is located on one side of the first wall in a first direction, the first groove includes a first groove segment, and the first groove segment and the second wall are arranged in the first direction; where the first wall is also provided with a second groove, in the first direction, the second wall has a first outer surface facing away from an interior of the shell, and a projection of the second groove in a thickness direction of the first wall is located between the first outer surface and a projection of the first groove segment in the thickness direction of the first wall.

In the above technical solution, the shell has the first wall and the second wall connected to each other, and the first wall is provided with the first groove, so that the first wall can rupture along the first groove during pressure relief of the battery cell, so as to release the internal pressure of the battery cell, where the first wall is also provided with the second groove, the first groove has a first groove segment arranged in the first direction with the second groove, and the second groove is located in the first direction between the first groove segment of the first groove and the first outer surface of the second wall, so that the second groove can play a certain separation role between a region of the first wall where the first groove segment is arranged and the second wall, on the one hand, the second groove can absorb the excess material from extrusion of the first groove segment during a forming process of the first groove segment of the first groove, so as to reduce a phenomenon that the first outer surface of the second wall caused by local extrusion during the fabrication of the first groove segment on the first wall partially arches or that the first wall partially arches, and thus the problems of local size increase of the battery cell in the first direction or reduction of planeness of the first wall can be reduced, so as to improve the size consistency of the shell, which is beneficial to improving the production quality of the battery cell. On the other hand, when the battery cell is subjected to internal and external impact forces and deformed, the second groove can also absorb the deformation energy of the battery cell, so that the second groove can play a buffering role between the first groove segment and the second wall, a certain protective effect on the region of the first wall where the first groove segment is arranged is achieved, phenomena such as the deformation or damage of a region of the first wall where the first groove is arranged when the battery cell is subjected to internal and external impact forces are effectively reduced, and a situation that pressure relief of the battery cell is actuated in advance during use is relieved, which is beneficial to improving the use reliability and service life of the battery cell.

In some embodiments, in the first direction, a minimum distance Li between the first groove segment and the first outer surface is greater than or equal to 0.11 times a size L₂ of the battery cell, and the minimum distance L₁ between the first groove segment and the first outer surface is less than or equal to 0.44 times the size L₂ of the battery cell.

In the above technical solution, by setting a ratio of the minimum distance between the first groove segment and the first outer surface to the size of the battery cell in the first direction to 0.11 to 0.44, the second groove arranged between the first groove segment and the first outer surface can better absorb the excess material from extrusion of the first groove segment during the forming process of the first groove segment of the first groove, thereby facilitating the improvement of the size consistency of the battery cell in the first direction and the improvement of the planeness of the first wall.

In some embodiments, in the first direction, the minimum distance L₁ between the first groove segment and the first outer surface is greater than or equal to 0.15 times the size L₂ of the battery cell, and the minimum distance L₁ between the first groove segment and the first outer surface is less than or equal to 0.4 times the size L₂ of the battery cell.

In the above technical solution, by further setting the ratio of the minimum distance between the first groove segment and the first outer surface to the size of the battery cell in the first direction to 0.15 to 0.4, the absorbing effect of the second groove on the excess material from extrusion of the first groove segment during the forming process of the first groove segment of the first groove can be further improved, which is beneficial to further improving the planeness of the first wall and the size consistency of the battery cell in the first direction.

In some embodiments, in the first direction, the minimum distance between the first groove segment and the first outer surface is L₁, satisfying 10 mm ≤L₁≤ 44 mm.

In the above technical solution, by setting the minimum distance between the first groove segment and the first outer surface in the first direction to be greater than or equal to 10 mm, on the one hand, a size of a region between the first groove segment and the first outer surface in the first direction can be increased, so as to reduce the difficulty of setting the second groove between the first groove segment and the first outer surface and alleviate a phenomenon that the second groove cannot be set between the first groove segment and the first outer surface, which is beneficial to reducing the manufacturing difficulty of the battery cell. On the other hand, the phenomenon of poor effect of absorbing, by the second groove, the extruded excess material during the forming process of the first groove segment due to small spacing between the first groove segment and the first outer surface can be alleviated, and the phenomenon that the local size of the battery cell is increased or the planeness of the first wall is poor due to local extrusion during the fabrication of the first groove segment of the first wall of the shell can be reduced, thereby effectively improving the size consistency of the shell. By setting the minimum distance between the first groove segment and the first outer surface in the first direction to be less than or equal to 44 mm, the phenomenon of space waste or excessive fabrication of the second groove caused when a size of the region between the first groove segment and the first outer surface in the first direction is too large can be reduced, thereby facilitating reducing of the manufacturing cost of the battery cell.

In some embodiments, in the first direction, the size of the battery cell is L₂, satisfying 25 mm≤L₂≤100 mm.

In the above technical solution, by setting the size of the battery cell in the first direction to be greater than or equal to 25 mm, on the one hand, the number or size of electrode assemblies contained in the shell can be increased, which is beneficial to improving the energy density of the battery cell; and on the other hand, the problem of high difficulty in manufacturing the battery cell caused by too small size of the battery cell in the first direction can be alleviated, so the difficulty in manufacturing the battery cell is reduced, which is beneficial to improving the production efficiency of the battery cell. By setting the size of the battery cell in the first direction to be less than or equal to 100 mm, a phenomenon of high difficulty in subsequent assembly of the battery cell due to the excessive size of the battery cell in the first direction can be alleviated, and the manufacturing difficulty of the battery cell can be reduced.

In some embodiments, in the thickness direction of the first wall, a minimum residual thickness of the first groove is D₁, and a minimum residual thickness of the second groove is D₂, satisfying D₂>D₁.

In the above technical solution, by setting the minimum residual thickness of the first groove to be smaller than the minimum residual thickness of the second groove, the strength of a region of the first wall where the first groove is arranged is less than the strength of a region of the first wall where the second groove is arranged, so that the first wall of the shell can preferentially rupture along the first groove and release the internal pressure of the battery cell, which helps to alleviate the phenomenon of poor pressure relief effect of the battery cell caused when the first wall ruptures from the region where the second groove is arranged.

In some embodiments, in the thickness direction of the first wall, the first wall has a first surface and a second surface opposite to each other; where the first groove is arranged in the first surface, and the second groove is arranged in the second surface.

In the above technical solution, the first groove and the second groove are respectively arranged in the first surface and the second surface on both sides of the first wall, so that the first groove and the second groove are respectively located on both sides of the first wall, thereby facilitating the fabrication of the first groove and the second groove respectively on both sides of the first wall, which is beneficial to reducing the mutual influence of the first groove and the second groove during the fabrication.

In some embodiments, in the first direction, a projection of the first groove at least partially overlaps with a projection of the second groove.

In the above technical solution, by making the projection of the first groove and the projection of the second groove in the first direction at least partially overlap, the second groove and the first groove segment of the first groove have mutually overlapping regions in the first direction, thus, on the one hand, the absorbing effect of the second groove on the extruded excess material during the forming process of the first groove segment can be improved, so as to reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be improved, so as to improve a buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, in the thickness direction of the first wall, a groove bottom surface of the second groove is closer to the first surface than a groove bottom surface of the first groove.

In the above technical solution, by making the groove bottom surface of the second groove closer to the first surface than the groove bottom surface of the first groove in the thickness direction of the first wall, the second groove and the first groove segment of the first groove have mutually overlapping regions in the first direction, thus, on the one hand, the absorbing effect of the second groove on the extruded excess material during the forming process of the first groove segment can be improved, so as to reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be improved, so as to improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, in the thickness direction of the first wall, a maximum groove depth of the second groove is H₁, and a minimum residual thickness of the first groove is D₁, satisfying H₁>D₁.

In the above technical solution, by setting the maximum groove depth of the second groove to be greater than the minimum residual thickness of the first groove, the second groove and the first groove segment of the first groove have mutually overlapping regions in the first direction, thus, on the one hand, the absorbing effect of the second groove on the extruded excess material during the forming process of the first groove segment can be improved, so as to reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be improved, so as to improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, the first groove is a multi-stage groove arranged in sequence in a direction from the first surface to the second surface. In the thickness direction of the first wall, in two adjacent stages of grooves, one stage of groove away from the first surface is arranged in a groove bottom surface of one stage of groove close to the first surface; where a groove arranged in the first surface in the multi-stage groove is a first-stage groove, and in the first direction, a projection of the second groove at least partially overlaps with a projection of the first-stage groove.

In the above technical solution, by arranging the first groove as the multi-stage groove distributed in the thickness direction of the first wall and making a projection of the second groove at least partially overlap with the projection of the first-stage groove of the first groove in the first direction, the second groove can cover, in the first direction, other stages of grooves arranged in a groove bottom surface of the first-stage groove in the first groove segment, thus, on the one hand, an absorbing effect of the second groove on the extruded excess material during the forming process of fabricating the multi-stage groove of the first groove segment can be improved, so as to further reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be further improved, so as to further improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, the first groove is the multi-stage groove arranged in sequence in the direction from the first surface to the second surface. In the thickness direction of the first wall, in two adjacent stages of grooves, one stage of groove away from the first surface is arranged in the groove bottom surface of one stage of groove close to the first surface; where the groove arranged in the first surface in the multi-stage groove is the first-stage groove, and in the thickness direction of the first wall, the groove bottom surface of the second groove is flush with a groove bottom surface of the first-stage groove or the groove bottom surface of the second groove is closer to the first surface than the groove bottom surface of the first-stage groove.

In the above technical solution, by arranging the first groove as the multi-stage groove distributed in the thickness direction of the first wall and making, in the thickness direction of the first wall, the groove bottom surface of the second groove flush with the groove bottom surface of the first-stage groove or making, in the thickness direction of the first wall, the groove bottom surface of the second groove closer to the first surface than the groove bottom surface of the first-stage groove, the second groove can cover, in the first direction, other stages of grooves arranged in the groove bottom surface of the first-stage groove in the first groove segment, thus, on the one hand, an absorbing effect of the second groove on the extruded excess material during the forming process of fabricating the multi-stage groove of the first groove segment can be improved, so as to further reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be further improved, so as to further improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, the first groove is the multi-stage groove arranged in sequence in the direction from the first surface to the second surface. In the thickness direction of the first wall, in two adjacent stages of grooves, one stage of groove away from the first surface is arranged in the groove bottom surface of one stage of groove close to the first surface; where the groove arranged in the first surface in the multi-stage groove is the first-stage groove, the maximum groove depth of the second groove is H₁, and the minimum residual thickness of the first-stage groove is D₃, satisfying H₁≥D₃.

In the above technical solution, by arranging the first groove as the multi-stage groove distributed in the thickness direction of the first wall and setting the maximum groove depth of the second groove to be greater than or equal to the minimum residual thickness of the first-stage groove in the multi-stage groove, the second groove can cover, in the first direction, other stages of grooves arranged in the groove bottom surface of the first-stage groove in the first groove segment, thus, on the one hand, an absorbing effect of the second groove on the extruded excess material during the forming process of fabricating the multi-stage groove of the first groove segment can be improved, so as to further reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be further improved, so as to further improve the buffering effect of the second groove between the first groove segment and the second wall, thereby being able to further reduce the phenomenon that the region of the first wall where the first groove is arranged is deformed or damaged when the battery cell is subjected to internal and external impact forces.

In some embodiments, in the thickness direction of the first wall, the first wall has the first surface and the second surface opposite to each other; where both the first groove and the second groove are arranged in the first surface.

In the above technical solution, by arranging both the first groove and the second groove in the first surface of the first wall, the first groove and the second groove are located on the same side of the first wall, so that both the first groove and the second groove are structures fabricated on the same side of the first wall. On the one hand, it is convenient to realize the mutual spacing and avoidance between the first groove and the second groove during the fabrication, which is beneficial to reducing the difficulty of fabricating the first groove and the second groove in the first wall. On the other hand, the fabrication of the first groove and the second groove can be realized without flipping the first wall, which is beneficial to optimizing the production takt of the battery cell.

In some embodiments, the first groove is the multi-stage groove arranged in sequence in the direction from the first surface to the second surface. In the thickness direction of the first wall, in two adjacent stages of grooves, one stage of groove away from the first surface is arranged in the groove bottom surface of one stage of groove close to the first surface; where the groove arranged in the first surface in the multi-stage groove is the first-stage groove, and in the thickness direction of the first wall, the groove bottom surface of the first-stage groove is closer to the first surface than the groove bottom surface of the second groove.

In the above technical solution, by making, in the thickness direction of the first wall, the groove bottom surface of the first-stage groove closer to the first surface than the groove bottom surface of the second groove, the second groove is a structure for covering the first-stage groove of the first groove segment in the first direction, thus, on the one hand, an absorbing effect of the second groove on the extruded excess material during the forming process of fabricating the multi-stage groove of the first groove segment can be improved, so as to reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be improved, so as to improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, the first groove is the multi-stage groove arranged in sequence in the direction from the first surface to the second surface. In the thickness direction of the first wall, in two adjacent stages of grooves, one stage of groove away from the first surface is arranged in the groove bottom surface of one stage of groove close to the first surface; where the groove arranged in the first surface in the multi-stage groove is the first-stage groove, in the thickness direction of the first wall, the maximum groove depth of the second groove is H₁, and a maximum groove depth of the first-stage groove is H₂, satisfying H₁>H₂.

In the above technical solution, by setting the maximum groove depth of the second groove to be greater than the maximum groove depth of the first-stage groove in the multi-stage groove of the first groove, the second groove is a structure for covering the first-stage groove of the first groove segment in the first direction, thus, on the one hand, an absorbing effect of the second groove on the extruded excess material during the forming process of fabricating the multi-stage groove of the first groove segment can be improved, so as to reduce the phenomenon that the local size of the battery cell is increased or the planeness of the first wall is poor due to local extrusion during the fabrication of the first groove segment of the first wall of the shell; and on the other hand, the absorbing effect of the second groove on the deformation energy of the battery cell when the battery cell is subjected to internal and external impact forces and deformed can be improved, so as to improve the buffering effect of the second groove between the first groove segment and the second wall, thereby being able to effectively reduce the phenomenon that the region of the first wall where the first groove is arranged is deformed or damaged when the battery cell is subjected to internal and external impact forces.

In some embodiments, the first surface is a surface of a side of the first wall facing away from an interior of the shell.

In the above technical solution, by setting the first surface of the first wall to be the surface of the side of the first wall facing away from the interior of the shell, the first groove is arranged on the side of the first wall facing away from the interior of the shell, thereby facilitating the formation of the first groove in the first wall of the shell, which is beneficial to reducing the difficulty of fabricating the first groove and improving the production efficiency of the battery cell.

In some embodiments, in the first direction, the shell has two second walls arranged opposite to each other in the first direction, and the two second walls are respectively connected to two sides of the first wall; where in the first direction, the first groove segment is located between the two second walls, and second grooves are arranged between the first groove segment and the first outer surfaces of the two second walls.

In the above technical solution, the shell has two second walls located on two sides of the first wall in the first direction, and second grooves are arranged between the two second walls and the first groove segment, so that the first groove segment is located between the two second grooves in the first direction. On the one hand, the two second grooves can absorb the excess material extruded from two sides during the forming process of the first groove segment, so as to further reduce the phenomenon that the local size of the battery cell is increased or the planeness of the first wall is poor due to local extrusion during the fabrication of the first groove segment of the first wall of the shell. On the other hand, the two second grooves can protect from two sides of the first groove segment, so as to absorb the deformation energy transmitted from the two sides of the first groove segment when the battery cell is subjected to internal and external impact forces, thereby being able to further reduce the phenomenon that the region of the first wall where the first groove is arranged is deformed or damaged when the battery cell is subjected to internal and external impact forces.

In some embodiments, the first wall is of a rectangular structure, and a width direction of the first wall and a thickness direction of the second wall are parallel to the first direction.

In the above technical solution, the first wall is of the rectangular structure, so that the shell of the battery cell is of a cuboid structure, and the width direction of the first wall and the thickness direction of the second wall extend in the first direction, so that the second groove is located on one side of the first groove segment in the width direction of the first wall, and the second groove is arranged on a side, extremely prone to deforming or extremely prone to being affected by impact force, of the first groove segment during the forming process of the first groove segment, which is beneficial to improving the buffering and protection effect of the second groove on the first groove segment.

In some embodiments, in the thickness direction of the first wall, two ends of a projection of the second groove in its extension direction respectively extend beyond two ends of a projection of the first groove segment.

In the above technical solution, in the thickness direction of the first wall, by arranging the projection of the second groove in its extension direction to extend respectively beyond the two ends of the projection of the first groove segment, the second groove is of a structure in which the two ends in its extension direction respectively exceed the two ends of the first groove segment, thereby improving a separation effect of the second groove between the first groove segment and the second wall, so as to improve the absorbing effect of the second groove on the extruded excess material during the forming process of the first groove segment, and a blocking effect of the second groove on the deformation energy of the battery cell when the battery cell is subjected to internal and external impact forces can be improved.

In some embodiments, the second groove extends in a second direction, and in the second direction, two ends of the second groove extend beyond the two ends of the first groove segment respectively, and the first direction, the second direction and the thickness direction of the first wall are perpendicular to one another.

In the above technical solution, by arranging the second groove to be of a structure extending in the second direction, it is beneficial to improving the regularity of the shape of the second groove, thereby reducing the difficulty of fabricating the second groove, and the second groove is conveniently arranged to be of a structure in which the two ends in the second direction respectively exceed the two ends of the first groove segment, so as to reduce the difficulty of manufacturing the battery cell, which is beneficial to improving the production efficiency of the battery cell.

In some embodiments, the first groove further includes a second groove segment, the first groove segment is connected to the second groove segment, the first groove segment and the second groove segment jointly define a predetermined pressure relief region, and the predetermined pressure relief region is configured to be opened when the first wall ruptures along at least a part of the first groove to release the internal pressure of the battery cell.

In the above technical solution, the first groove also has a second groove segment, and the second groove segment and the first groove segment are interconnected, so that the first groove segment and the second groove segment jointly define a predetermined pressure relief region. On the one hand, a pressure relief area of the battery cell can be increased, so a pressure relief rate of the battery cell is increased. On the other hand, a position where the first groove segment and the second groove segment are interconnected is weaker, which is easier to rupture and open the predetermined pressure relief region so as to release the internal pressure of the battery cell.

In some embodiments, the first groove further includes a second groove segment and a third groove segment, the second groove segment and the third groove segment are arranged opposite to each other in the second direction, and the second direction is perpendicular to the first direction; where the first groove segment is connected to the second groove segment and the third groove segment, and the first groove segment, the second groove segment and the third groove segment jointly define a predetermined pressure relief region, and the predetermined pressure relief region is configured to be opened and flipped around the second groove when the first wall ruptures along the first groove so as to release the internal pressure of the battery cell.

In the above technical solution, the first groove also includes a third groove segment arranged opposite to the second groove segment in the second direction, and the first groove segment is connected to the second groove segment and the third groove segment, so that the first wall can rupture along the first groove segment, the second groove segment and the third groove segment during pressure relief of the battery cell, so as to open the predetermined pressure relief region to release the internal pressure of the battery cell. The first groove of such structure makes an intersection position of the first groove segment and the second groove segment and a connection position of the first groove segment and the third groove segment weaker, which is easier to rupture and open the predetermined pressure relief region for pressure relief, and the pressure relief area and pressure relief rate of the battery cell can be further improved. In addition, since the second groove and the first groove segment are arranged in the first direction, the predetermined pressure relief region defined by the first groove segment, the second groove segment and the third groove segment can also be flipped around the second groove used as an axis when opened, which is beneficial to improving an effect and degree of opening the predetermined pressure relief region, so as to further improve the pressure relief effect of the battery cell.

In some embodiments, a connection position between the second groove segment and the first groove segment deviates from the two ends of the second groove segment, and the connection position between the third groove segment and the first groove segment deviates from the two ends of the third groove segment, so that the predetermined pressure relief regions are formed on two sides of the first groove segment.

In the above technical solution, by setting the connection position between the second groove segment and the first groove segment to be located between the two ends of the second groove segment, and setting the connection position between the third groove segment and the first groove segment to be located between the two ends of the third groove segment, so that the first groove segment, the second slot segment and the third groove segment form a structure similar to a shape "H", the predetermined pressure relief regions can be formed on the two sides of the first groove segment of the first groove, and the two predetermined pressure relief regions can be opened in a split manner for pressure relief during pressure relief of the battery cell, which is beneficial to further increasing the pressure relief effect of the battery cell and can effectively improve the pressure relief rate of the battery cell.

In some embodiments, the first groove segment, the second groove segment and the third groove segment extend along a linear trajectory, and the second groove segment and the third groove segment are perpendicular to the first groove segment.

In the above technical solution, by setting the second groove segment and the third groove segment to be perpendicular to the first groove segment, so that an extension direction of the first groove segment is an arrangement direction of the second groove segment and the third groove segment, on the one hand, the regularity of the shape of the first groove can be improved, which is conducive to reducing the fabrication difficulty of the first groove, so as to reduce the manufacturing cost of the battery cell; and on the other hand, it is convenient for the two predetermined pressure relief regions on the first wall located on the two sides of the first groove segment to release pressure in opposite directions during pressure relief of the battery cell.

In some embodiments, the first groove segment, the second groove segment and the third groove segment extend along an arc-shaped trajectory.

In the above technical solution, by setting the first groove segment, the second groove segment and the third groove segment to be of structures extending along the arc-shaped trajectory, it is beneficial to improving an arc degree of the connection position of the first groove segment and the second groove segment and improving an arc degree of the connection position of the first groove segment and the third groove segment. On the one hand, the difficulty of fabricating the first groove can be reduced, and on the other hand, the first wall can conveniently rupture along the first groove segment, the second groove segment and the third groove segment to open the predetermined pressure relief region so as to release the internal pressure of the battery cell.

In some embodiments, the first groove further includes a fourth groove segment, the fourth groove segment is located between the second groove segment and the third groove segment, and the fourth groove segment is connected to the first groove segment.

In the above technical solution, the first groove is also provided with the fourth groove segment located between the second groove segment and the third groove segment, and the fourth groove segment is interconnected with the first groove segment, so that the stress at a position where the fourth groove segment and the first groove segment are interconnected is more concentrated and easier to implement rupturing, so the first wall can rupture along the first groove segment from a position where the first groove segment and the fourth groove segment intersect, and rupture along the second groove segment and the third groove segment after the first groove segment ruptures, so as to achieve rapid pressure relief of the battery cell.

In some embodiments, in the thickness direction of the first wall, the projection of the first groove does not overlap with the projection of the second groove.

In the above technical solution, by arranging the first groove and the second groove to be of structures in which the projection of the first groove does not overlap with the projection of the second groove in the thickness direction of the first wall, so that the first groove and the second groove do not make contact with each other. On the one hand, the mutual influence between the first groove and the second groove during the fabrication can be reduced; and on the other hand, the phenomenon of the first wall rupturing along the second groove when the first wall ruptures along the first groove to release pressure can be reduced, and the stress influence between the region of the first wall where the first groove is arranged and a region of the first wall where the second groove is arranged can be reduced.

In some embodiments, in the first direction, the second groove and the first groove are disposed at intervals.

In the above technical solution, by arranging the second groove and the second groove segment and the third groove segment of the first groove in the first direction at intervals, so that the predetermined pressure relief region defined by the first groove segment, the second groove segment and the third groove segment can be flipped around the region of the first wall where the second groove is arranged when opened, and a flipping angle of the predetermined pressure relief region after being opened can be increased, so as to increase the pressure relief area of the battery cell.

In some embodiments, the first groove is formed in the first wall in a stamping manner.

In the above technical solution, by forming the first groove in the first wall in a stamping manner, so that the forming method of the first groove is simple, which is beneficial to reducing the production cost of the battery cell.

In some embodiments, the second groove is formed in the first wall in a stamping manner.

In the above technical solution, by forming the second groove in the first wall in a stamping manner, so that the forming method of the second groove is simple, which is beneficial to reducing the production cost of the battery cell.

In some embodiments, the shell includes a shell body and an end cover; an accommodating cavity having an opening is formed inside the shell body, and the accommodating cavity is configured to accommodate an electrode assembly; and the end cover closes the opening, where the shell body includes the first wall, or the end cover is the first wall.

In the above technical solution, by arranging the first wall of the shell as a wall of the shell body, the battery cell adopting this structure can make a region of the shell where the first groove and the second groove are arranged be away from the end cover, thereby effectively alleviating a phenomenon that the stress generated by the connection between the end cover and the shell body acts on the region where the first groove and the second groove are arranged, so as to reduce the impact on the region of the first wall where the first groove and the second groove are arranged, and further help to reduce the risk of rupturing or structural strength reduction in the region of the first wall where the first groove and the second groove are arranged under the pulling action of stress, so as to prolong the service life of the battery cell and improve use reliability of the battery cell. By arranging the first wall of the shell to be the end cover, for closing the opening, of the shell, for the battery cell of such structure, the first groove and the second groove are conveniently arranged in the end cover, which is beneficial to reducing the difficulty of manufacturing the battery cell, so as to improve the production efficiency of the battery cell.

In some embodiments, the shell includes a shell body and two end covers; an accommodating cavity is formed inside the shell body and configured to accommodate an electrode assembly, and openings are formed in two opposite ends of the shell body and communicate with the accommodating cavity; and the two end covers respectively close the two openings, where one of the two end covers is the first wall, or the shell body includes the first wall.

In the above technical solution, the openings are arranged in the two opposite ends of the shell body of the shell, the two end covers respectively close the two openings, the first wall is one of the two end covers, for the battery cell of such structure, the battery cell is conveniently assembled from the two ends of the shell body, the difficulty of manufacturing and assembling the battery cell is better reduced, the first groove and the second groove are conveniently arranged in the end covers, and the difficulty of manufacturing the battery cell is better reduced, so as to improve the production efficiency of the battery cell. by arranging the first wall of the shell to be one wall of the shell body, for the battery cell of such structure, a region of the shell where the first groove and the second groove are arranged can be made to be away from the end cover, thereby effectively alleviating the phenomenon that the stress generated by the connection between the end cover and the shell body acts on the region where the first groove and the second groove are arranged, so as to reduce the impact on the region of the first wall where the first groove and the second groove are arranged, and further help to reduce the risk of rupturing or structural strength reduction in the region of the first wall where the first groove and the second groove are arranged under the pulling action of stress, so as to prolong the service life of the battery cell and improve use reliability of the battery cell.

In some embodiments, the material of the first wall includes a steel material.

In the above technical solution, by setting the material of the first wall to be the steel material, due to the characteristic of high strength of steel, the first wall made of steel has better strength, so that when the bursting pressure of the battery cell is constant, the first wall may be made thinner, which is beneficial to saving the space occupied by the first wall.

In some embodiments, the steel material is carbon steel or stainless steel.

In the above technical solution, carbon steel or stainless steel is used as the material of the first wall, which has low cost and is easy to manufacture.

In some embodiments, the material of the first wall includes an aluminum alloy.

In the above technical solution, by setting the material of the first wall to be the aluminum alloy, due to the characteristics of aluminum alloy having light weight and good ductility, it is easier to fabricate the first groove and the second groove in the first wall, which is beneficial to reducing the manufacturing difficulty of the first groove and the second groove.

In some embodiments, the aluminum alloy includes components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

In the above technical solution, the aluminum alloy has lower hardness and better forming ability, which can further reduce the fabrication difficulty of the first groove and the second groove and improve the machining accuracy of the first groove and the second groove, thereby facilitating improving the pressure relief consistency of the battery cell.

In some embodiments, the aluminum alloy includes components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%.

In the above technical solution, the first wall made of this aluminum alloy has higher hardness, higher strength, and good damage resistance.

In a second aspect, an embodiment of the present application further provides a battery, including the above-mentioned battery cell.

In a third aspect, an embodiment of the present application further provides an electrical apparatus, including the above-mentioned battery cell, the battery cell being configured to provide electric energy.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is an exploded structural view of a battery according to some embodiments of the present application;
FIG. 3 is a schematic structural view of a battery cell according to some embodiments of the present application;
FIG. 4 is an exploded structural view of a battery cell provided by some embodiments of the present application;
FIG. 5 is a bottom view of a shell of a battery cell provided by some embodiments of the present application;
FIG. 6 is a partial section view of a shell of a battery cell provided by some embodiments of the present application;
FIG. 7 is a partial enlarged view at position A of a shell shown in FIG. 6;
FIG. 8 is a bottom view of a shell of a battery cell provided by other embodiments of the present application;
FIG. 9 is a partial section view of a shell of a battery cell provided by yet other embodiments of the present application;
FIG. 10 is a bottom view of a shell of a battery cell provided by further embodiments of the present application;
FIG. 11 is a bottom view of a shell of a battery cell provided by some other embodiments of the present application;
FIG. 12 is a bottom view of a shell of a battery cell provided by further yet other embodiments of the present application.

Reference numerals: 1000-Vehicle; 100-Battery; 10-Box; 11-First box body; 12-Second box body; 20-Battery cell; 21-Shell; 211-First wall; 2111-First surface; 2112-Second surface; 2113-Predetermined pressure relief region; 212-Second wall; 2121-First outer surface; 213-First groove; 213a-First groove segment; 213b-Second groove segment; 213c-Third groove segment; 213d-Fourth groove segment; 2131-First-stage groove; 2132-Second-stage groove; 2133-Third-stage groove; 214-Second groove; 215-Shell body; 2151-Opening; 216-End cover; 22-Electrode assembly; 221-Tab; 23-Electrode terminal; 24-Current collecting member; 200-Controller; 300-Motor; X-First direction; Y-Second direction; Z-Thickness direction of first wall.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium-nickel-cobalt-aluminum oxide (such as LiNi_{0.85}Co_{0.15}Al_{0.05}O₂) and their respective modified compounds.

In some embodiments, a positive electrode may adopt foam metal. The foam metal may be foam nickel, foam copper, foam aluminum, a foam alloy, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, a negative electrode current collector may adopt a metal foil, foam metal, or a composite current collector. For example, as the metal foil, silver surface-treated aluminum or stainless steel, stainless steel, copper, aluminum, nickel, carbon electrode, nickel, titanium, or the like can be used. The foam metal may be foam nickel, foam copper, foam aluminum, a foam alloy, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the electrode assembly further includes a spacer, and the spacer is arranged between the positive electrode and the negative electrode.

In some implementations, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some implementations, the spacer is a solid electrolyte. The solid electrolyte is arranged between the positive electrode and the negative electrode, and plays roles in transmitting ions and isolating the positive electrode from the negative electrode.

In some implementations, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate and lithium tetrafluoro(oxalato)phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, ethyl methyl sulfone and diethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient and thus is an important part for the current development of new energy. With the development of the battery technology, it is necessary to consider many design factors, such as an energy density, a cycle life, a discharge capacity, a charge-discharge rate and other performance parameters. In addition, the safety of the battery should also be considered.

In the battery technologies, for a common battery cell, in order to ensure the safety in use of the battery cell, a pressure relief structure may be usually arranged on the battery cell, so as to release an internal pressure of the battery cell through the pressure relief structure, thereby being capable of effectively improving the safety in use of the battery cell. In the related art, the pressure relief structure is usually formed on a shell through an integrated forming process, for example, a score groove is stamped in the shell, so that when an internal pressure or temperature of the battery cell reaches a threshold, the pressure relief structure is capable of being actuated and opened to release the internal pressure of the battery cell. However, in the process of stamping the score groove in the shell, an excess material of the score groove may flow to two sides to be discharged, so that the shell is prone to material extrusion, resulting in poor flatness of the shell or increased local size, resulting in poor size consistency of the shell, which is not conducive to improving the production quality of the battery cell. However, during use, when the battery cell is subjected to internal and external impact forces, the shell may be deformed, for example, expansion of an electrode assembly causes internal impact or external collision causes external impact, so the deformation energy of the shell may directly act on the pressure relief structure, consequently, there is a risk of deformation or damage to the pressure relief structure, thereby resulting in poor stability in use of the pressure relief structure, and easily causing the pressure relief structure to be actuated in advance to release pressure during use, which is not conducive to prolonging the service life and improving use reliability of the battery cell.

Based on the above considerations, in order to solve the problem of low production quality of battery cells, an embodiment of the present application provides a battery cell. The battery cell includes a shell, the shell has a first wall and a second wall connected to each other, the first wall is provided with a first groove, the first wall is configured to be capable of rupturing along at least a part of the first groove during pressure relief of the battery cell to release the internal pressure of the battery cell, the second wall is located on one side of the first wall in the first direction, the first groove includes a first groove segment, and the first groove segment and the second wall are arranged in the first direction. The first wall is also provided with a second groove. In the first direction, the second wall has a first outer surface facing away from an interior of the shell, and a projection of the second groove in a thickness direction of the first wall is located between the first outer surface and a projection of the first groove segment in the thickness direction of the first wall. The first direction is perpendicular to the thickness direction of the first wall.

In the battery cell of such structure, the shell has the first wall and the second wall connected to each other, the first wall is provided with the first groove, so that the first wall can rupture along the first groove during pressure relief of the battery cell, so as to release the internal pressure of the battery cell. The first wall is further provided with the second groove, the first groove has the first groove segment arranged with the second groove in the first direction, and the second groove is located in the first direction between the first groove segment of the first groove and the first outer surface of the second wall, so that the second groove can play a certain separation role between a region of the first wall where the first groove segment is arranged and the second wall. On the one hand, the second groove can absorb the excess material from extrusion of the first groove segment during the forming process of the first grove segment of the first groove, so as to alleviate a phenomenon that the first outer surface of the second wall partially arches or the first wall partially arches due to local extrusion during the fabrication of the first groove segment in the first wall, thus the problem that a local size of the battery cell in the first direction is increased or planeness of the first wall is reduced can be reduced, and the size consistency of the shell is improved, which is beneficial to improving the production quality of the battery cell. On the other hand, the second groove can also absorb the deformation energy of the battery cell when the battery cell is subjected to internal and external impact forces and deformed, so the second groove can play a role in buffering between the first groove segment and the second wall and play a certain role in protecting the region of the first wall where the first groove segment is arranged, so the phenomenon that the region of the first wall where the first groove is arranged is deformed or damaged when the battery cell is subjected to the internal and external impact forces can be effectively reduced, and the situation that the pressure relief is actuated in advance during use of the battery cell is alleviated, which is beneficial to improving the use reliability of the battery cell and prolonging the service life of the battery cell.

The battery cell disclosed in the embodiment of the present application can be used, but is not limited to, an electrical apparatus, such as a vehicle, a ship, or an aircraft. A power source system of the electrical apparatus may be composed of the battery cell disclosed in the present application, a battery, and the like, which is conducive to alleviating the problem of poor size consistency of the shell of the battery cell, so as to improve the production quality of the battery cell.

An embodiment of the present application provides an electrical apparatus with a battery used as a power source. The electrical apparatus may be, but is not limited to, a mobile phone, a tablet computer, a laptop, an electric toy, an electric tool, a storage battery car, an electric vehicle, a ship, a spacecraft, etc. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

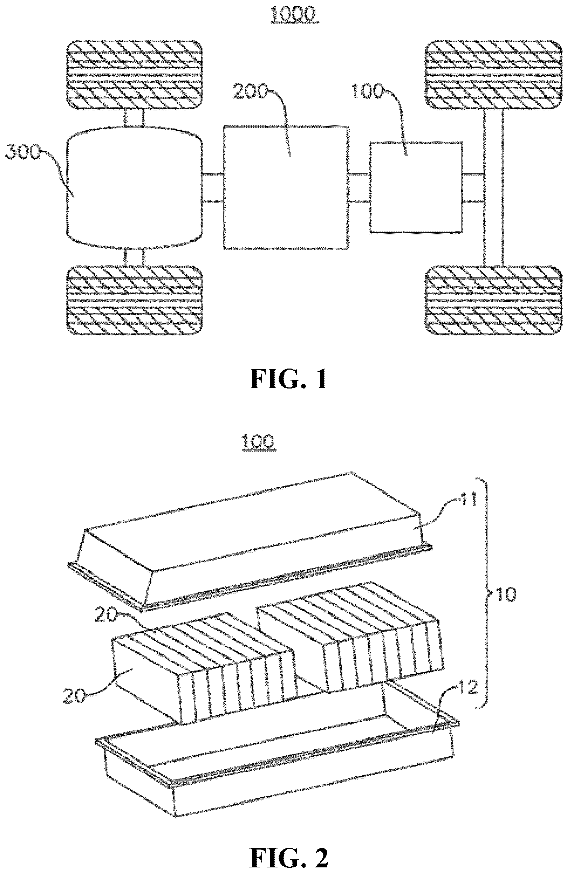

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended range electric vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 can not only be used as the operating power source or usage power source for the vehicle 1000, but also as the driving power source for the vehicle 1000 to replace or partially replace fuel or natural gas to provide driving power for the vehicle 1000.

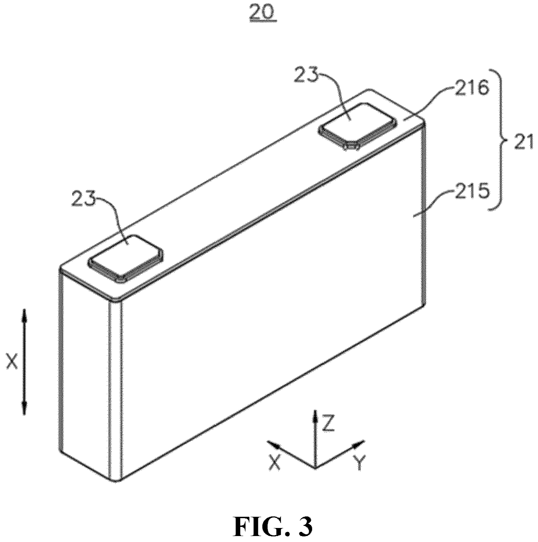

Referring to FIG. 2 and FIG. 3, FIG. 2 is an exploded structural view of a battery 100 according to some embodiments of the present application, and FIG. 3 is a schematic structural view of a battery cell 20 according to some embodiments of the present application. The battery 100 includes a box 10 and battery cells 20, and the battery cells 20 are accommodated in the box 10.
where the box 10 is configured to provide an assembling space for the battery cells 20, and the box 10 may be of various structures. In some embodiments, the box 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder, a cuboid, or a cube. Exemplarily, in FIG. 2, the box 10 is in a cuboid shape.

In the battery 100, one battery cell 20 or a plurality of battery cells 20 may be arranged in the box 10. If a plurality of battery cells 20 are arranged in the box 10, the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery, or may be a lithium-sulfur battery, a sodium-ion battery or a magnesium-ion battery, but is not limited thereto. The battery cell 20 may be in a cuboid shape, a cylinder shape, a prism shape or other shapes. For example, in FIG. 3, the battery cell 20 is of a cuboid structure.

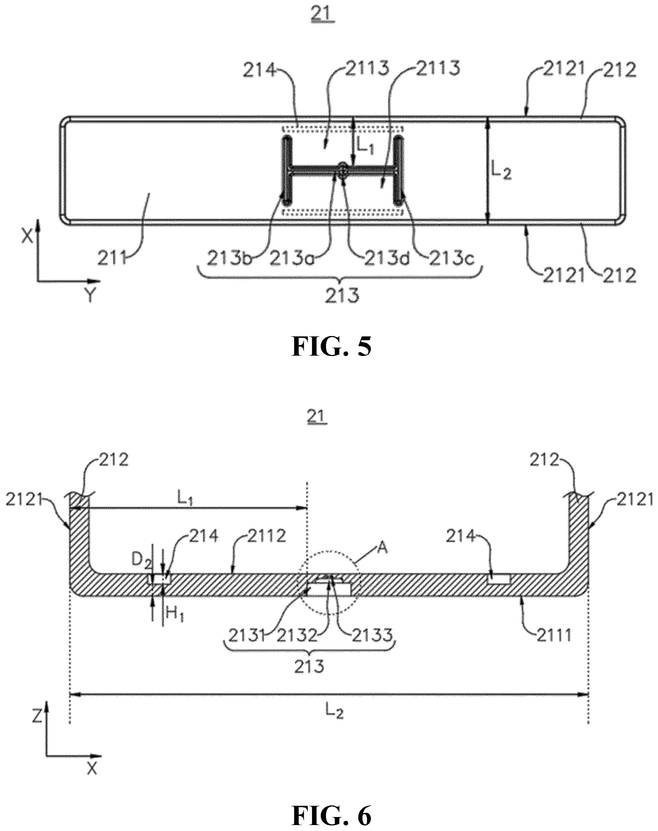

According to some embodiments of the present application, referring to FIG. 3, and further referring to FIG. 4, FIG. 5 and FIG. 6, FIG. 4 is an exploded structural view of a battery cell 20 provided by some embodiments of the present application, FIG. 5 is a bottom view of a shell 21 of a battery cell 20 provided by some embodiments of the present application, and FIG. 6 is a partial section view of a shell 21 of a battery cell 20 provided by some embodiments of the present application. The present application provides a battery cell 20. The battery cell 20 includes a shell 21. The shell 21 has a first wall 211 and a second wall 212 connected to each other, the first wall 211 is provided with a first groove 213, the first wall 211 is configured to be capable of rupturing along at least a part of the first groove 213 during pressure relief of the battery cell 20 to release the internal pressure of the battery cell 20, the second wall 212 is located on one side of the first wall 211 in the first direction X, the first groove 213 includes a first groove segment 213a, and the first groove segment 213a and the second wall 212 are arranged in the first direction X. The first wall 211 is also provided with a second groove 214. In the first direction X, the second wall 212 has a first outer surface 2121 facing away from an interior of the shell 21, and a projection of the second groove 214 in a thickness direction Z of the first wall is located between the first outer surface 2121 and the first groove segment 213a in the thickness direction Z of the first wall. The first direction X is perpendicular to the thickness direction Z of the first wall.

The first groove 213 plays s role in pressure relief and configured to make the first wall 211 rupture along the first groove 213 when the internal pressure or temperature of the battery cell 20 reaches a preset value so as to release the internal pressure of the battery cell 20.

Optionally, the first groove 213 may be arranged on one side of the first wall 211 facing the interior of the shell 21, or may be arranged on one side of the first wall 211 facing away from the interior of the shell 21. For example, in FIG. 5 and FIG. 6, the first groove 213 is arranged on the side of the first wall 211 facing away from the interior of the shell 21, that is, the first groove 213 is arranged in a surface of the side of the first wall 211 facing away from the interior of the shell 21.

Optionally, the second groove 214 may be arranged on the same side of the first wall 211 as the first groove 213, or the second groove and the first groove may be respectively arranged on two sides of the first wall 211. For example, in FIG. 5 and FIG. 6, the second groove 214 and the first groove 213 are respectively arranged on the two sides of the first wall 211, the first groove 213 is arranged on the side of the first wall 211 facing away from the interior of the shell 21, and the second groove 214 is arranged on the side of the first wall 211 facing the interior of the shell 21.

Exemplarily, both the first groove 213 and the second groove 214 are formed by a stamping process.

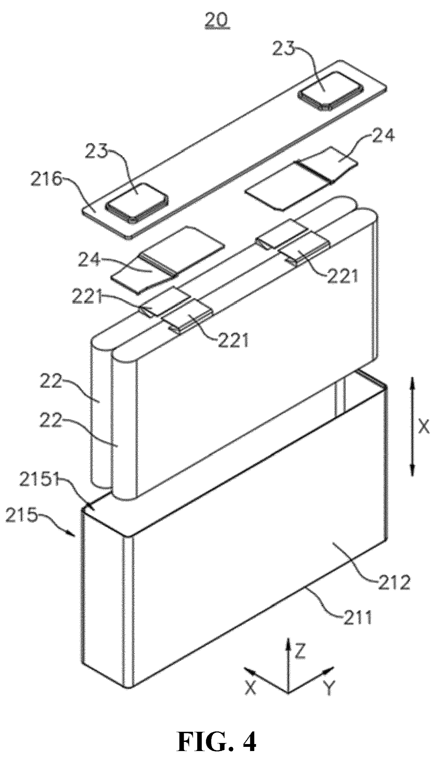

The shell 21 has the first wall 211 and the second wall 212 connected to each other, that is, the first wall 211 and the second wall 212 are two adjacent and interconnected walls of the shell 21 respectively. Exemplarily, in FIG. 4, FIG. 5 and FIG. 6, the shell 21 is of a cuboid structure, the first wall 211 and the second wall 212 are two walls perpendicular to each other, and correspondingly, a thickness direction of the second wall 212 is the first direction X, and the first outer surface 2121 is of a planar structure. It needs to be noted that, in some embodiments, if the shell 21 is of a cylinder structure, the first wall 211 is one wall at one axial end of the shell 21, and the second wall 212 is a circular side wall arranged around the first wall 211. Correspondingly, the first direction X is a radial direction of the first wall 211, and the first outer surface 2121 is an arc surface.

Exemplarily, in FIG. 4, FIG. 5 and FIG. 6, the shell 21 is of a cuboid structure, and correspondingly, the first wall 211 is of a rectangular structure. The first direction X is a width direction of the first wall 211 and also the thickness direction of the second wall 212. The first wall 211 and the second wall 212 are perpendicular to each other.

The first groove 213 includes the first groove segment 213a, and the first groove segment 213a and the second wall 212 are arranged in the first direction X, that is, the first groove 213 has the first groove segment 213a arranged in the first direction X with the second wall 212, that is, the first groove segment 213a is a straight groove segment or an arc groove segment extending roughly in the second direction Y perpendicular to the first direction X.

The second groove 214 in the thickness direction Z of the first wall is located between the first outer surface 2121 and the first groove segment 213a in the thickness direction Z of the first wall, that is, in the first direction X, the first groove segment 213a, the second groove 214 and the first outer surface 2121 of the second wall 212 are arranged in sequence in the first direction X, so that the first groove segment 213a of the first groove 213 and the first outer surface 2121 of the second wall 212 are respectively located on the two sides of the second groove 214 in the first direction X.

The first outer surface 2121 is a surface of the second wall 212 facing away from the interior of the shell 21 in the first direction X.

Exemplarily, in FIG. 5, the second groove 214 and the first groove segment 213 a of the first groove 213 are of linear structures extending in the second direction Y, and the first direction X, the second direction Y and the thickness direction Z of the first wall are perpendicular to one another.

In some embodiments, referring to FIG. 4, the battery cell 20 may further include an electrode assembly 22, and the electrode assembly 22 is accommodated in the shell 21. The electrode assembly 22 is a component in the battery cell 20 where an electrochemical reaction occurs. The structure of the electrode assembly 22 may be diversified. For example, the electrode assembly 22 may be of a winded structure formed by winding a positive electrode plate, a spacer, and a negative electrode plate, or a stacked structure formed by stacking the positive electrode plate, the spacer, and the negative electrode plate.

Exemplarily, the spacer is a separator, and the main material of the separator may be selected from at least one of glass fiber, non-woven fabric, polyethylene, polypropylene, and polyvinylidene fluoride.

Optionally, one or a plurality of electrode assemblies 22 may be accommodated in the shell 21. For example, in FIG. 4, two electrode assemblies 22 are arranged in the shell 21 of the battery cell 20 and stacked in a thickness direction thereof. In other words, the two electrode assemblies 22 are stacked in a thickness direction of the battery cell 20. Certainly, in other embodiments, the number of the electrode assemblies 22 accommodated in the shell 21 may also be one, three, four, five, six, seven, eight, or the like.

The shell 21 may be further configured to accommodate an electrolyte, such as an electrolyte solution. The shell 21 may have various structural forms, such as a cylinder or cuboid or prismatic structure. Likewise, the shell 21 may also be made of various materials, such as copper, iron, aluminum, steel, or aluminum alloy.

In some embodiments, the shell 21 may include a shell body 215 and an end cover 216. An accommodating cavity is formed inside the shell body 215, the accommodating cavity is configured to accommodate the electrode assembly 22, and the accommodating cavity has an opening 2151. In other words, the shell body 215 is of a hollow structure having the opening 2151 at one end, and the end cover 216 covers the opening 2151 of the shell body 215 and forms a sealed connection to form a sealed space for accommodating the electrode assembly 22 and the electrolyte.

Optionally, the shell body 215 includes a bottom wall and a side wall which integrally formed. The side wall is arranged around the bottom wall. One end of the side wall is connected to the bottom wall, the other end of the side wall defines the opening 2151, and the end cover 216 covers the opening 2151 and is arranged opposite to the bottom wall.

It should be noted that the first wall 211 with the first groove 213 may be the end cover 216 of the shell 21, or may also be one wall of the shell body 215 of the shell 21. Exemplarily, in FIG. 3 and FIG. 4, the first wall 211 is a bottom wall of the shell body 215 disposed opposite to the end cover 216 in the thickness direction Z of the first wall, and correspondingly, the second wall 212 is one of the side walls of the shell body 215. Certainly, the structure of the battery cell 20 is not limited thereto. In other embodiments, the first wall 211 may also be the end cover 216, and the first wall 211 may also be a side wall of the shell body 215 adjacent to and interconnected to the end cover 216.

When the battery cell 20 is assembled, the electrode assembly 22 may be placed in the shell body 215 first, the shell body 215 is filled with the electrolyte solution, and then the opening 2151 of the shell body 215 is covered by the end cover 216, so as to complete the assembling of the battery cell 20.

The shell body 215 may have a variety of shapes, such as a cylinder, a cuboid, or a prismatic structure. The shape of the shell body 215 may be determined according to the specific shape of the electrode assembly 22. For example, if the electrode assembly 22 is of a cylinder structure, the shell body 215 of a cylinder structure may be selected; and if the electrode assembly 22 is of a cuboid structure, the shell body 215 of a cuboid structure may be selected. Certainly, the end cover 216 may have various structures. For example, the end cover 216 may be of a plate-like structure or of a hollow structure with one end open. Exemplarily, in FIG. 4, the shell body 215 is of a cuboid structure, and the end cover 216 is of a rectangular plate-like structure.

Certainly, it is understandable that the shell 21 is not limited to the above-mentioned structure and may also be of other structures. For example, the shell 21 may include a shell body 215 and two end covers 216, the shell body 215 is of a hollow structure with openings 2151 on two opposite sides, and each end cover 216 correspondingly covers one opening 2151 of the shell body 215 and forms a sealed connection, so as to form a sealed space for accommodating the electrode assembly 22 and the electrolyte. In other words, the shell body 215 is provided with openings 2151 on two opposite sides, the two end covers 216 respectively cover the two sides of the shell body 215 to close the corresponding openings 2151, and correspondingly, the first wall 211 is one end cover 216 of the two end covers 216.

In some embodiments, as shown in FIG. 4, the battery cell 20 may further include an electrode terminal 23. The electrode terminal 23 is installed on the shell 21 in an insulated manner, and the electrode terminal 23 is electrically connected to the electrode assembly 22 to input or output electric energy of the battery cell 20.

It should be noted that the electrode terminal 23 is installed on the shell 21 in an insulated manner, that is, no electrical connection is formed between the electrode terminal 23 and the shell 21.

In FIG. 3 and FIG. 4, the battery cell 20 includes two electrode terminals 23, the two electrode terminals 23 are disposed at intervals on the first wall 211 in the second direction Y, correspondingly, each electrode assembly 22 has two tabs 221, and the two tabs 221 have opposite polarities. The two electrode terminals 23 are electrically connected to the two tabs 221 of the electrode assembly 22 respectively, so as to realize the input or output of a positive electrode and a negative electrode of the battery cell 20. It should be noted that the tab 221 of the electrode assembly 22 is a component formed by stacking and connecting regions on the positive electrode plate that are not coated with a positive electrode active material layer or a component formed by stacking and connecting regions on the negative electrode plate that are not coated with a negative electrode active material layer. If the tab 221 is used to output the positive electrode of the electrode assembly 22, the tab 221 is the component formed by stacking and connecting the regions on the positive electrode plate that are not coated with the positive electrode active material layer. If the tab 221 is used to output the negative electrode of the electrode assembly 22, the tab 221 is the component formed by stacking and connecting the regions on the negative electrode plate that are not coated with the negative electrode active material layer.

Exemplarily, the electrode terminal 23 may be made of a variety of materials. For example, the electrode terminal 23 may be made of copper, iron, aluminum, steel, aluminum alloy, or the like.

Optionally, the electrode terminal 23 may be installed on the shell 21 in various structures. For example, in FIG. 3 and FIG. 4, the two electrode terminals 23 are installed on the end cover 216 of the shell 21. Certainly, the structure of the battery cell 20 is not limited to this. In other embodiments, the two electrode terminals 23 may also be installed on the shell body 215 of the shell 21. Similarly, for the two electrode terminals 23, one electrode terminal 23 may be installed on the shell body 215 of the shell 21 and the other electrode terminal 23 may be installed on the end cover 216 of the shell 21.

In some embodiments, as shown in FIG. 4, the battery cell 20 may further include two current collecting members 24, both of which are disposed in the shell 21. Each current collecting member 24 is used to be connected to an electrode terminal 23 and tabs 221 with the same polarity in a plurality of electrode assemblies 22 to achieve the electrical connection between the electrode terminal 23 and the electrode assembly 22, which is beneficial to reducing the assembling difficulty between the tabs 221 and the electrode terminal 23.

Exemplarily, the current collecting member 24 may be made of a variety of materials. For example, the current collecting member 24 may be made of copper, iron, aluminum, steel, aluminum alloy, or the like.

In the present embodiment, the shell 21 has the first wall 211 and the second wall 212 connected to each other, the first wall 211 is provided with the first groove 213, so that the first wall 211 can rupture along the first groove 213 during pressure relief of the battery cell 20, so as to release the internal pressure of the battery cell 20. The first wall 211 is further provided with the second groove 214, the first groove 213 has the first groove segment 213a arranged with the second groove 214 in the first direction X, and the second groove 214 is located in the first direction X between the first groove segment 213a of the first groove 213 and the first outer surface 2121 of the second wall 212, so that the second groove 214 can play a certain separation role between a region of the first wall 211 where the first groove segment 213a is arranged and the second wall 212. On the one hand, the second groove 214 can absorb the excess material from extrusion of the first groove segment 213a during the forming process of the first groove segment 213a of the first groove 213, so as to alleviate a phenomenon that the first outer surface 2121 of the second wall 212 partially arches or the first wall 211 partially arches due to local extrusion during the fabrication of the first groove segment 213a in the first wall 211, thus the problem that a local size of the battery cell 20 in the first direction X is increased or planeness of the first wall 211 is reduced can be reduced, and the size consistency of the shell 21 is improved, which is beneficial to improving the production quality of the battery cell 20. On the other hand, the second groove 214 can also absorb the deformation energy of the battery cell 20 when the battery cell 20 is subjected to internal and external impact forces and deformed, so the second groove 214 can play a role in buffering between the first groove segment 213a and the second wall 212 and play a certain role in protecting the region of the first wall 211 where the first groove segment 213a is arranged, so the phenomenon that the region of the first wall 211 where the first groove 213 is arranged is deformed or damaged when the battery cell 20 is subjected to the internal and external impact forces can be effectively reduced, and the situation that the pressure relief is actuated in advance during use of the battery cell 20 is alleviated, which is beneficial to improving the use reliability of the battery cell 20 and prolonging the service life of the battery cell.

According to some embodiments of the present application, referring to FIG. 5 and FIG. 6, in the first direction X, the minimum distance Li between the first groove segment 213a and the first outer surface 2121 is greater than or equal to 0.11 times a size L₂ of the battery cell 20, and the minimum distance Li between the first groove segment 213a and the first outer surface 2121 is less than or equal to 0.44 times the size L₂ of the battery cell 20, that is, in the first direction X, the minimum distance between the first groove segment 213a and the first outer surface 2121 is L₁, and the size of the battery cell 20 is L₂, satisfying 0.11≤L₁/L₂≤0.44.

The minimum distance Li between the first groove segment 213a and the first outer surface 2121 is a minimum distance between a projection of the first groove segment 213a in a plane perpendicular to the thickness direction Z of the first wall and the first outer surface 2121.

Exemplarily, the shell 21 of the battery cell 20 is of a cuboid structure. Correspondingly, L₁ is spacing between the first groove segment 213a and the first outer surface 2121 of a side of the second wall 212 facing away from the electrode assembly 22 in the first direction X, and L₂ is a thickness of the battery cell 20 in the first direction X.

Optionally, a ratio of the minimum distance L₁ between the first groove segment 213a and the first outer surface 2121 in the first direction X to the thickness L₂ of the battery cell 20 in the first direction X may be 0.11, 0.12, 0.15, 0.18, 0.2, 0.22, 0.25, 0.28, 0.3, 0.35, 0.4 or 0.44, etc.

In order to make the technical problems addressed by, the technical solutions, and the beneficial effects of the embodiments of the present application clearer, the following will further describe them in detail in conjunction with Comparative examples 1 to 8 and Examples 1 to 16. Apparently, the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without making any creative effort shall fall within the scope of protection of the present application.

Comparative example 1

### 1) Preparation of a positive electrode plate

A positive electrode active material LiNi_{0.7}Co_{0.1}Mn₀₁O₂, a conductive agent Super P, and a binder polyvinylidene fluoride (PVDF) are prepared into a positive electrode slurry in N-methyl pyrrolidone (NMP), where a solid content in the positive electrode slurry is 50wt%, and a mass ratio of LiNi_{0.7}Co_{0.1}Mn_{0.1}O₂ to Super P to PVDF in the solid components is 8:1:1; and the positive electrode slurry is coated on upper and lower surfaces of a current collector aluminum foil and dried at 85°C, then cold pressed, then trimmed, sliced and divided into strips, and then dried under a vacuum condition at 85°C for 4 h to obtain the positive electrode plate.

### 2) Preparation of a negative electrode plate

Graphite, the conductive agent Super P, a thickener carboxymethyl cellulose (CMC), and a binder styrene butadiene rubber (SBR) are mixed evenly in deionized water to be prepared into a negative electrode slurry, where a solid content in the negative electrode slurry is 30wt%, and a mass ratio of graphite to silicon monoxide to Super P to CMC to the binder styrene butadiene rubber (SBR) in the solid components is 88:7:3:2; and the negative electrode slurry is coated on upper and lower surfaces of a current collector copper foil and dried at 85°C, and then cold pressed, trimmed, sliced and divided into strips, and then dried under a vacuum condition at 120°C for 12 h to obtain a negative electrode plate.

### 3) Preparation of an electrolyte

In an argon atmosphere glove box (H₂O<0.1ppm, O₂<0.1ppm), a fully dried electrolyte salt LiPF₆ is dissolved in a mixed solvent (the mixed solvent includes ethylene carbonate (EC) and diethyl carbonate (DEC), and the ethylene carbonate (EC) and the diethyl carbonate (DEC) are mixed according to a mass ratio of 50:50), and after uniform mixing, a liquid electrolyte having a concentration of 1 mol/L is obtained.

### 4) Spacer

A 16 µm polyethylene film is used as a spacer.

### 5) Preparation of a battery cell 20

The positive electrode plate, the spacer, and the negative electrode plate are stacked in order, so that the spacer is located between the positive electrode plate and the negative electrode plate to play a role in isolating a positive electrode and a negative electrode, and an electrode assembly 22 is obtained by winding, and the electrode assembly 22 is placed in an aluminum shell 21, and the prepared electrolyte is injected into the dried shell 21, and through encapsulation, standing, formation, shaping, capacity testing and the like, preparation of the battery cell 20 is completed; and a first groove 213 and a second groove 214 are formed in the shell 21 of the battery cell 20. The shell 21 of the battery cell 20 of Comparative Example 1 is of a cuboid structure (the first groove 213 is of an "H"-shaped structure, that is, the first groove 213 includes a first groove segment 213a, a second groove segment 213b and a third groove segment 213c, and the second groove segment 213b and the third groove segment 213c are arranged at intervals in a second direction Y and extend in a first direction X, the first groove segment 213a is connected to a position between the second groove segment 213b and the third groove segment 213c, the first groove segment 213a extends in the second direction Y, and the first groove segment 213a is located in a middle of the first wall 211 in the first direction X), the battery cell 20 has a thickness of 39 mm in the first direction X and a length of 203 mm in the second direction Y, and a minimum distance L₁ between the first groove segment 213a and a first outer surface 2121 is 1.95 mm.

The preparation methods of the battery cells 20 of Examples 1 to 4 and Comparative example 2 are the same as that of Comparative example 1, except that the minimum distance L₁ between the first groove segment 213a and the first outer surface 2121 is different, as shown in Table 1 for details.

The preparation methods of the battery cells 20 of Examples 5 to 8 and Comparative examples 3 to 4 are the same as that of Comparative example 1. The battery cells 20 of Examples 5 to 8 and Comparative examples 3 to 4 each have a thickness of 25 mm in the first direction X and a length of 148 mm in the second direction Y. The difference is that the minimum distance L₁ between the first groove segment 213a and the first outer surface 2121 is different, as shown in Table 2 for details.

The preparation methods of the battery cells 20 of Examples 9 to 12 and Comparative examples 5 to 6 are the same as that of Comparative example 1. The battery cells 20 of Examples 9 to 12 and Comparative examples 5 to 6 each have a thickness of 44 mm in the first direction X and a length of 203 mm in the second direction Y. The difference is that the minimum distance L₁ between the first groove segment 213a and the first outer surface 2121 is different, as shown in Table 3 for details.

The preparation methods of the battery cells 20 of Examples 13 to 16 and Comparative examples 7 to 8 are the same as that of Comparative example 1. The battery cells 20 of Examples 13 to 16 and Comparative examples 7 to 8 each have a thickness of 100 mm in the first direction X and a length of 203 mm in the second direction Y. The difference is that the minimum distance L₁ between the first groove segment 213a and the first outer surface 2121 is different, as shown in Table 4 for details.

The first groove 213 is fabricated under different conditions according to the ratio of the minimum distance L₁ between the first groove segment 213a and the first outer surface 2121 in the first direction X to the thickness L₂ of the battery cell 20 in the first direction X through Comparative examples 1 to 8 and Examples 1 to 16. After the fabrication is completed, an expansion value of the battery cell 20 in the first direction X is measured, and a planeness difference of the first wall 211 is measured. A specific measurement method is as follows.

The method for measuring the expansion value of the battery cell 20 in the first direction X: in the second direction Y, a thickness of the battery cell 20 in the first direction X at 5 mm away from the edge of the first wall 211 is measured to obtain a reference value of the thickness of the battery cell 20 in the first direction X, then a thickness of the battery cell 20 in the first direction X in three regions of the first wall 211 where the first groove 213 is arranged is measured to obtain an experimental value 1, an experimental value 2 and an experimental value 3 of the thickness of the battery cell 20 in the first direction X, and the reference value is subtracted from an average value of the experimental value 1, the experimental value 2 and the experimental value 3 to obtain the expansion value of the battery cell 20 in the first direction X.

The method for measuring the planeness difference of the first wall 211: in a region of the first wall 211 where the first groove 213 is not arranged, namely, four measuring points are taken near two ends of the first wall 211 in the first direction X, the planeness of the four measuring points is measured, and an average value of the planeness of the four measuring points is calculated to obtain a reference value of the planeness, then two experimental points are taken respectively on two sides of the first groove segment 213a, the planeness of the four experimental points is measured, and an average value of the planeness of the four experimental points is calculated to obtain an experimental value of the planeness, and finally the reference value is subtracted from the experimental value to obtain the planeness difference of the first wall 211.

The test results of Comparative examples 1 to 2 and Examples 1 to 4 are shown in Table 1.

**Table 1**

| Number | L₁ (mm) | L₂ (mm) | L₁/L₂ | Expansion value of the battery cell 20 in the first direction X | Planeness difference of the first wall 211 |
|---|---|---|---|---|---|
| Comparative example 1 | 3.12 | 39 | 0.08 | 0.6 mm | 0.6 mm |
| Example 1 | 4.29 | 39 | 0.11 | 0.4 mm | 0.3 mm |
| Example 2 | 5.85 | 39 | 0.15 | 0.3 mm | 0.2 mm |
| Example 3 | 15.6 | 39 | 0.4 | 0.3 mm | 0.2 mm |
| Example 4 | 17.16 | 39 | 0.44 | 0.4 mm | 0.3 mm |
| Comparative example 2 | 17.94 | 39 | 0.46 | 0.5 mm | 0.4 mm |

The test results of Comparative examples 3 to 4 and Examples 5 to 8 are shown in Table 2.

**Table 2**

| Number | L₁ (mm) | L₂ (mm) | L₁/L₂ | Expansion value of the battery cell 20 in the first direction X | Planeness difference of the first wall 211 |
|---|---|---|---|---|---|
| Comparative example 3 | 2.5 | 25 | 0.1 | 0.5 mm | 0.5 mm |
| Example 5 | 2.75 | 25 | 0.11 | 0.4 mm | 0.3 mm |
| Example 6 | 3.75 | 25 | 0.15 | 0.3 mm | 0.2 mm |
| Example 7 | 10 | 25 | 0.4 | 0.3 mm | 0.2 mm |
| Example 8 | 11 | 25 | 0.44 | 0.4 mm | 0.3 mm |
| Comparative example 4 | 11.5 | 25 | 0.46 | 0.5 mm | 0.4 mm |

The test results of Comparative examples 5 to 6 and Examples 9 to 12 are shown in Table 3.

**Table 3**

| Number | L₁ (mm) | L₂ (mm) | L₁/L₂ | Expansion value of the battery cell 20 in the first direction X | Planeness difference of the first wall 211 |
|---|---|---|---|---|---|
| Comparative example 5 | 4.4 | 44 | 0.1 | 0.5 mm | 0.5 mm |
| Example 9 | 4.84 | 44 | 0.11 | 0.4 mm | 0.3 mm |
| Example 10 | 6.6 | 44 | 0.15 | 0.3 mm | 0.2 mm |
| Example 11 | 17.6 | 44 | 0.4 | 0.3 mm | 0.2 mm |
| Example 12 | 19.36 | 44 | 0.44 | 0.4 mm | 0.3 mm |
| Comparative example 6 | 20.24 | 44 | 0.46 | 0.5 mm | 0.4 mm |

The test results of Comparative examples 7 to 8 and Examples 13 to 16 are shown in Table 4.

**Table 4**

| Number | L₁ (mm) | L₂ (mm) | L₁/L₂ | Expansion value of the battery cell 20 in the first direction X | Planeness difference of the first wall 211 |
|---|---|---|---|---|---|
| Comparative example 7 | 10 | 100 | 0.1 | 0.5 mm | 0.5 mm |
| Example 13 | 11 | 100 | 0.11 | 0.4 mm | 0.3 mm |
| Example 14 | 15 | 100 | 0.15 | 0.3 mm | 0.2 mm |
| Example 15 | 40 | 100 | 0.4 | 0.3 mm | 0.2 mm |
| Example 16 | 44 | 100 | 0.44 | 0.4 mm | 0.3 mm |
| Comparative example 8 | 46 | 100 | 0.46 | 0.5 mm | 0.4 mm |

Referring to Table 1 to Table 4, it can be seen from the test results of Comparative examples 1 to 8 and Examples 1 to 16 that after the ratio of the minimum distance between the first groove segment 213a and the first outer surface 2121 to the size of the battery cell 20 in the first direction X is less than 0.11, the expansion value of the battery cell 20 in the first direction X reaches 0.5 mm and above, thereby causing the thickness of the battery cell 20 in the first direction X to have a relatively obvious expansion phenomenon, consequently, the consistency of the thickness of the battery cell 20 in the first direction X is poor, and the planeness difference of the first wall 211 reaches 0.5 mm and above, thereby causing poor planeness of the first wall 211. When the ratio of the minimum distance between the first groove segment 213a and the first outer surface 2121 to the size of the battery cell 20 in the first direction X is greater than or equal to 0.11, the expansion value of the battery cell 20 in the first direction X can reach 0.4 mm and within 0.4 mm, and the planeness difference of the first wall 211 can reach 0.3 mm and within 0.3 mm, so that the second groove 214 arranged between the first groove segment 213a and the first outer surface 2121 can have a good absorbing effect on the excess material from extrusion of the first groove segment 213a during the forming process of the first groove segment 213a of the first groove 213, which is beneficial to improving the size consistency of the battery cell 20 in the first direction X and improving the planeness of the first wall 211. Therefore, the ratio of the minimum distance between the first groove segment 213a and the first outer surface 2121 to the size of the battery cell 20 in the first direction X is set to be greater than or equal to 0.11.

Likewise, referring to Table 1 to Table 4, it can be seen from the test results of Comparative examples 1 to 8 and Examples 1 to 16 that after the ratio of the minimum distance between the first groove segment 213a and the first outer surface 2121 to the size of the battery cell 20 in the first direction X is greater than 0.44, the expansion value of the battery cell 20 in the first direction X reaches 0.5 mm and above, thereby causing the thickness of the battery cell 20 in the first direction X to have a relatively obvious expansion phenomenon, consequently, the consistency of the thickness of the battery cell 20 in the first direction X is poor, and the planeness difference of the first wall 211 reaches 0.4 mm and above, thereby causing poor planeness of the first wall 211. When the ratio of the minimum distance between the first groove segment 213a and the first outer surface 2121 to the size of the battery cell 20 in the first direction X is less than or equal to 0.44, the expansion value of the battery cell 20 in the first direction X can reach 0.4 mm and within 0.4 mm, and the planeness difference of the first wall 211 can reach 0.3 mm and within 0.3 mm, so that the second groove 214 arranged between the first groove segment 213a and the first outer surface 2121 can have a good absorbing effect on the excess material from extrusion of the first groove segment 213a during the forming process of the first groove segment 213a of the first groove 213, which is beneficial to improving the size consistency of the battery cell 20 in the first direction X and improving the planeness of the first wall 211. Therefore, the ratio of the minimum distance between the first groove segment 213a and the first outer surface 2121 to the size of the battery cell 20 in the first direction X is set to be less than or equal to 0.44.

In the present embodiment, by setting the ratio of the minimum distance between the first groove segment 213a and the first outer surface 2121 to the size of the battery cell 20 in the first direction X to be 0.11 to 0.44, the second groove 214 arranged between the first groove segment 213a and the first outer surface 2121 can have a good absorbing effect on the excess material from extrusion of the first groove segment 213a during the forming process of the first groove segment 213a of the first groove 213, which is beneficial to improving the size consistency of the battery cell 20 in the first direction X and improving the planeness of the first wall 211.

In some embodiments, please continue to refer to FIG. 5 and FIG. 6, in the first direction X, the minimum distance L₁ between the first groove segment 213a and the first outer surface 2121 is greater than or equal to 0.15 times the size L₂ of the battery cell 20, and the minimum distance L₁ between the first groove segment 213a and the first outer surface 2121 is less than or equal to 0.4 times the size L₂ of the battery cell 20. In other words, in the first direction X, the minimum distance between the first groove segment 213a and the first outer surface 2121 is L₁, and the size of the battery cell 20 is L₂, satisfying 0.15≤L₁/L₂≤0.4.

Likewise, referring to Table 1 to Table 4, it can be seen from the test results of Comparative examples 1 to 8 and Examples 1 to 16 that when the ratio of the minimum distance between the first groove segment 213a and the first outer surface 2121 to the size of the battery cell 20 in the first direction X is greater than or equal to 0.15 and less than or equal to 0.4, the expansion value of the battery cell 20 in the first direction X reaches 0.3 mm and within 0.3 mm, the planeness difference of the first wall 211 can reach 0.2 mm and within 0.2 mm, so that the second groove 214 arranged between the first groove segment 213a and the first outer surface 2121 can have a good absorbing effect on the excess material from extrusion of the first groove segment 213a during the forming process of the first groove segment 213a of the first groove 213, which is beneficial to further improving the size consistency of the battery cell 20 in the first direction X and further improving the planeness of the first wall 211. Therefore, the ratio of the minimum distance between the first groove segment 213a and the first outer surface 2121 to the size of the battery cell 20 in the first direction X is set to be 0.15 to 0.4.

In the present embodiment, by further setting the ratio of the minimum distance between the first groove segment 213a and the first outer surface 2121 to the size of the battery cell 20 in the first direction X to be 0.15 to 0.4, the second groove 214 can have a further improved absorbing effect on the excess material from extrusion of the first groove segment 213a during the forming process of the first groove segment 213a of the first groove 213, which is beneficial to further improving the planeness of the first wall 211 and further improving the size consistency of the battery cell 20 in the first direction X.

According to some embodiments of the present application, as shown in FIG. 5 and FIG. 6, in the first direction X, the minimum distance between the first groove segment 213a and the first outer surface 2121 is L₁, satisfying 10 mm≤L₁≤44 mm.

Exemplarily, the minimum distance L₁ between the first groove segment 213a and the first outer surface 2121 in the first direction X may be 10 mm, 11 mm, 12 mm, 13 mm, 15 mm, 15.6 mm, 17 mm, 17.16 mm, 17.6 mm, 18 mm, 19 mm, 19.36 mm, 20 mm, 22 mm, 25 mm, 30 mm, 35 mm, 40 mm, 44 mm or the like.

In the present embodiment, by setting the minimum distance between the first groove segment 213a and the first outer surface 2121 in the first direction X to be greater than or equal to 10 mm, on the one hand, a size of a region between the first groove segment 213a and the first outer surface 2121 in the first direction X can be increased, so as to lower the difficulty of arranging the second groove 214 between the first groove segment 213a and the first outer surface 2121, and a phenomenon of failure in arranging the second groove 214 between the first groove segment 213a and the first outer surface 2121 can be alleviated, which is beneficial to reducing the manufacturing difficulty of the battery cell 20. On the other hand, a phenomenon of poor absorbing effect of the second groove 214 on the extruded excess material during the forming process of the first groove segment 213a due to too small spacing between the first groove segment 213a and the first outer surface 2121 can be alleviated, and the phenomenon that a local size of the battery cell 20 is increased or the planeness of the first wall 211 is poor due to local extrusion during the process of fabricating the first groove segment 213a of the first wall 211 of the shell 21 is reduced, thereby being able to effectively improve the size consistency of the shell 21. By setting the minimum distance between the first groove segment 213a and the first outer surface 2121 in the first direction X to be less than or equal to 44 mm, a phenomenon of space waste due to too large size of the region between the first groove segment 213a and the first outer surface 2121 in the first direction X or excessive fabrication of the second groove 214 is reduced, which is beneficial to reducing the manufacturing cost of the battery cell 20.

In some embodiments, referring to FIG. 5 and FIG. 6, in the first direction X, the size of the battery cell 20 is L₂, satisfying 25 mm≤L₂≤100 mm.

Exemplarily, the size L₂ of the battery cell 20 in the first direction X may be 25 mm, 28 mm, 30 mm, 35 mm, 39 mm, 40 mm, 44 mm, 50 mm, 60 mm, 70 mm, 80 mm, 90 mm, 100 mm or the like.

In the present embodiment, by setting the size of the battery cell 20 in the first direction X to be greater than or equal to 25 mm, on the one hand, the number and size of electrode assemblies 22 accommodated in the shell 21 can be increased, which is beneficial to improving an energy density of the battery cell 20. On the other hand, the problem of large manufacturing difficulty of the battery cell 20 due to too small size of the battery cell 20 in the first direction X can be alleviated, so as to reduce the manufacturing difficulty of the battery cell 20, which is beneficial to improving the production efficiency of the battery cell 20. By setting the size of the battery cell 20 in the first direction X to be less than or equal to 100 mm, the phenomenon of high difficulty in subsequent assembling of the battery cell 20 due to too large size of the battery cell 20 in the first direction X is alleviated, and the manufacturing difficulty of the battery cell 20 can be reduced.

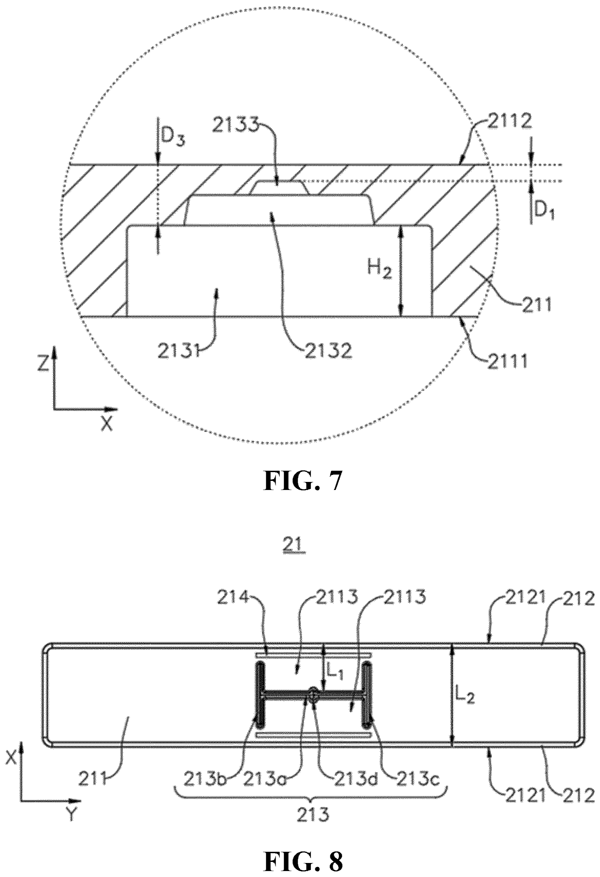

According to some embodiments of the present application, referring to FIG. 6 and further referring to FIG. 7, FIG. 7 is a partial enlarged view at position A of a shell 21 shown in FIG. 6. In the thickness direction Z of the first wall, a minimum residual thickness of the first groove 213 is D₁, and a minimum residual thickness of the second groove 214 is D₂, satisfying D₂>D₁.

The minimum residual thickness of the first groove 213 is D₁, that is, in the thickness direction Z of the first wall, a minimum thickness of a portion of the first wall 211 corresponding to a groove bottom surface of the first groove 213 is D₁, that is, a minimum thickness of a groove bottom wall of the first groove 213 in the thickness direction Z of the first wall is D₁. It should be noted that in an embodiment in which the first groove 213 includes only one smooth groove segment, the minimum residual thickness D₁ of the first groove 213 is a minimum thickness of a residual portion of the first wall 211 at the groove segment; and in an embodiment in which the first groove 213 includes a plurality of smooth groove segments, the minimum residual thickness D₁ of the first groove 213 is a minimum value of a thickness of a residual portion of the first wall 211 at the plurality of groove segments.

The minimum residual thickness of the second groove 214 is D₂, namely, in the thickness direction Z of the first wall, a minimum thickness of a portion of the first wall 211 corresponding to a groove bottom surface of the second groove 214 is D₂, namely, a minimum thickness of a groove bottom wall of the second groove 214 in the thickness direction Z of the first wall is D₂.

In the present embodiment, by setting the minimum residual thickness of the first groove 213 to be less than the minimum residual thickness of the second groove 214, a strength of the region of the first wall 211 where the first groove 213 is arranged is less than a strength of the region of the first wall 211 where the second groove 214 is arranged, so that the first wall 211 of the shell 21 can rupture preferentially along the first groove 213 to release the internal pressure of the battery cell 20, which is beneficial to alleviating the phenomenon of poor pressure relief effect of the battery cell 20 due to rupturing of the first wall 211 from the region where the second groove 214 is arranged.

According to some embodiments of the present application, as shown in FIG. 5, and FIG. 6, in the thickness direction Z of the first wall, the first wall 211 has a first surface 2111 and a second surface 2112 opposite to each other. The first groove 213 is arranged in the first surface 2111, and the second groove 214 is arranged in the second surface 2112.

The first surface 2111 and the second surface 2112 are surfaces on two sides of the first wall 211 respectively. Exemplarily, in FIG. 6, the first surface 2111 is a surface of the first wall 211 facing away from the interior of the shell 21. Certainly, in other embodiments, the first surface 2111 may also be a surface of the first wall 211 facing the interior of the shell 21.

The first groove 213 is arranged in the first surface 2111, and the second groove 214 is arranged in the second surface 2112. That is, the first groove 213 and the second groove 214 are arranged on the two sides of the first wall 211 respectively.

In the present embodiment, by arranging the first groove 213 and the second groove 214 in the first surface 2111 and the second surface 2112 on the two sides of the first wall 211 respectively, the first groove 213 and the second groove 214 are respectively located on the two sides of the first wall 211, so that the first groove 213 and the second groove 214 are conveniently fabricated on the two sides of the first wall 211 respectively, which is beneficial to reducing mutual influence of the first groove 213 and the second groove 214 during the fabrication process.

According to some embodiments of the present application, as shown in FIG. 6, in the first direction X, the projections of the first groove 213 and the second groove 214 at least partially overlap. That is, the projection of the second groove 214 in the first direction X covers at least a part of the first groove segment 213a of the first groove 213.

In the present embodiment, by making the projection of the first groove 213 and the projection of the second groove 214 in the first direction X at least partially overlap, the second groove 214 and the first groove segment 213a of the first groove 213 have mutually overlapping regions in the first direction X, thus, on the one hand, the absorbing effect of the second groove 214 on the extruded excess material during the forming process of the first groove segment 213a can be improved, so as to reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be improved, so as to improve a buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, as shown in FIG. 6, in the thickness direction Z of the first wall, the groove bottom surface of the second groove 214 is closer to the first surface 2111 than the groove bottom surface of the first groove 213. That is, in the thickness direction Z of the first wall, the groove bottom surface of the second groove 214 is located between the first surface 2111 and the groove bottom surface of the first groove 213.

In the present embodiment, by making the groove bottom surface of the second groove 214 closer to the first surface 2111 than the groove bottom surface of the first groove 213 in the thickness direction Z of the first wall, the second groove 214 and the first groove segment 213a of the first groove 213 have mutually overlapping regions in the first direction X, thus, on the one hand, the absorbing effect of the second groove 214 on the extruded excess material during the forming process of the first groove segment 213a can be improved, so as to reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be improved, so as to improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, as shown in FIG. 5 and FIG. 6, in the thickness direction Z of the first wall, a maximum groove depth of the second groove 214 is H₁, and the minimum residual thickness of the first groove 213 is D₁, satisfying H₁>D₁.

The maximum groove depth H₁ of the second groove 214 is a depth of a region of the second groove 214 where a groove depth is the largest.

In the present embodiment, by setting the maximum groove depth of the second groove 214 to be greater than the minimum residual thickness of the first groove 213, the second groove 214 and the first groove segment 213a of the first groove 213 have mutually overlapping regions in the first direction X, thus, on the one hand, the absorbing effect of the second groove 214 on the extruded excess material during the forming process of the first groove segment 213a can be improved, so as to reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be improved, so as to improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

In some embodiments, in the thickness direction Z of the first wall, a ratio of the maximum groove depth of the first groove 213 to the thickness of the first wall 211 is greater than or equal to 0.16 and less than 1. It should be noted that in an embodiment where the first groove 213 includes only one smooth groove segment, the maximum groove depth of the first groove 213 is the maximum depth of the groove segment; and in an embodiment where the first groove 213 includes the plurality of smooth groove segments, the maximum groove depth of the first groove 213 is the maximum groove depth of the groove segment with the largest depth among the plurality of groove segments.

Exemplarily, the ratio of the maximum groove depth of the first groove 213 in the thickness direction Z of the first wall to the thickness of the first wall 211 in the thickness direction Z of the first wall may be any point value of or a range value between any two of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99 or the like.

In some embodiments, in the thickness direction Z of the first wall, the maximum groove depth of the first groove 213 is greater than or equal to 0.4 mm and less than or equal to 2 mm, and the thickness of the first wall 211 is greater than or equal to 0.8 mm and less than or equal to 2.5 mm.

In the thickness direction Z of the first wall, the maximum groove depth of the first groove 213 may be any point value of or a range value between any two of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm or the like.

In the thickness direction Z of the first wall, the thickness of the first wall 211 may be any point value of or a range value between any two of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm or the like.

According to some embodiments of the present application, referring to FIG. 6 and FIG. 7, the first groove 213 is a multi-stage groove arranged in sequence in a direction from the first surface 2111 to the second surface 2112. In the thickness direction Z of the first wall, in two adjacent stages of grooves, one stage of groove away from the first surface 2111 is arranged in a groove bottom surface of one stage of groove close to the first surface 2111. A groove arranged in the first surface 2111 in the multi-stage groove is a first-stage groove 2131, and in the first direction X, a projection of the second groove 214 at least partially overlaps with a projection of the first-stage groove 2131.

The first groove 213 is a multi-stage groove arranged in sequence in the direction from the first surface 2111 to the second surface 2112, that is, the first groove 213 is of a stepped groove structure arranged on the first surface 2111.

The groove arranged in the first surface 2111 in the multi-stage groove is the first-stage groove 2131, namely, the groove, penetrating through the first surface 2111, in the multi-stage groove of the first groove 213 is the first-stage groove 2131. Exemplarily, in FIG. 6 and FIG. 7, the first groove 213 is a three-stage groove, including the first-stage groove 2131, a second-stage groove 2132 and a third-stage groove 2133 arranged in sequence. The first-stage groove 2131 is arranged in the first surface 2111. The second-stage groove 2132 is arranged in the groove bottom surface of the first-stage groove 2131. The third-stage groove 2133 is arranged in a groove bottom surface of the second-stage groove 2132. Certainly, in other embodiments, the first groove 213 may also be a two-stage groove, a four-stage groove, a five-stage groove, a six-stage groove or the like.

In the first direction X, the projection of the second groove 214 at least partially overlaps with a projection of the first-stage groove 2131, that is, the projection of the second groove 214 in the first direction X covers at least a part of the first-stage groove 2131 of the first groove segment 213a.

It should be noted that the first groove 213 is the multi-stage groove, and correspondingly, the first groove segment 213a of the first groove 213 is also of a multi-stage groove structure.

In the present embodiment, by arranging the first groove 213 as the multi-stage groove distributed in the thickness direction Z of the first wall and making a projection of the second groove 214 at least partially overlap with the projection of the first-stage groove 2131 of the first groove 213 in the first direction X, the second groove 214 can cover, in the first direction X, other stages of grooves arranged in a groove bottom surface of the first-stage groove 2131 in the first groove segment 213a, thus, on the one hand, an absorbing effect of the second groove 214 on the extruded excess material during the forming process of fabricating the multi-stage groove of the first groove segment 213a can be improved, so as to further reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be further improved, so as to further improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, referring to FIG. 6 and FIG. 7, the first groove 213 is a multi-stage groove arranged in sequence in a direction from the first surface 2111 to the second surface 2112. In the thickness direction Z of the first wall, in two adjacent stages of grooves, one stage of groove away from the first surface 2111 is arranged in a groove bottom surface of one stage of groove close to the first surface 2111. The groove arranged in the first surface 2111 in the multi-stage groove is the first-stage groove 2131, and in the thickness direction Z of the first wall, the groove bottom surface of the second groove 214 is flush with a groove bottom surface of the first-stage groove 2131 or the groove bottom surface of the second groove 214 is closer to the first surface 2111 than the groove bottom surface of the first-stage groove 2131.

The groove bottom surface of the second groove 214 is closer to the first surface 2111 than the groove bottom surface of the first-stage groove 2131, that is, in the thickness direction Z of the first wall, the groove bottom surface of the second groove 214 is located between the groove bottom surface of the first-stage groove 2131 of the first groove 213 and the first surface 2111.

In the present embodiment, by arranging the first groove 213 as the multi-stage groove distributed in the thickness direction Z of the first wall and making, in the thickness direction Z of the first wall, the groove bottom surface of the second groove 214 flush with the groove bottom surface of the first-stage groove 2131 or making, in the thickness direction of the first wall, the groove bottom surface of the second groove closer to the first surface 2111 than the groove bottom surface of the first-stage groove 2131, the second groove 214 can cover, in the first direction X, other stages of grooves arranged in the groove bottom surface of the first-stage groove 2131 in the first groove segment 213a, thus, on the one hand, an absorbing effect of the second groove 214 on the extruded excess material during the forming process of fabricating the multi-stage groove of the first groove segment 213a can be improved, so as to further reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be further improved, so as to further improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, referring to FIG. 6 and FIG. 7, the first groove 213 is a multi-stage groove arranged in sequence in a direction from the first surface 2111 to the second surface 2112. In the thickness direction Z of the first wall, in two adjacent stages of grooves, one stage of groove away from the first surface 2111 is arranged in a groove bottom surface of one stage of groove close to the first surface 2111. The groove arranged in the first surface 2111 in the multi-stage groove is the first-stage groove 2131, the maximum groove depth of the second groove 214 is H₁, and the minimum residual thickness of the first-stage groove 2131 is D₃, satisfying H₁≥D₃.

The minimum residual thickness of the first-stage groove 2131 is D₃, that is, in the thickness direction Z of the first wall, a portion of the first wall 211 corresponding to the groove bottom surface of the first-stage groove 2131 of the first groove 213 has a minimum thickness of D₃, in other words, a groove bottom wall of the first-stage groove 2131 of the first groove 213 in the thickness direction Z of the first wall has a minimum thickness of D₃. It needs to be noted that in an embodiment where the first groove 213 includes only one smooth groove segment, the minimum residual thickness D₃ of the first-stage groove 2131 is a minimum thickness of a residual portion of the first wall 211 at the first-stage groove 2131 of this groove segment. In an embodiment where the first groove 213 includes a plurality of smooth groove segments, the minimum residual thickness D₃ of the first-stage groove 2131 is a minimum value of a thickness of a residual portion of the first wall 211 at the first-stage groove 2131 of the plurality of groove segments.

In the present embodiment, by arranging the first groove 213 as the multi-stage groove distributed in the thickness direction Z of the first wall and setting the maximum groove depth of the second groove 214 to be greater than or equal to the minimum residual thickness of the first-stage groove 2131 in the multi-stage groove, the second groove 214 can cover, in the first direction X, other stages of grooves arranged in the groove bottom surface of the first-stage groove 2131 in the first groove segment 213a, thus, on the one hand, an absorbing effect of the second groove 214 on the extruded excess material during the forming process of fabricating the multi-stage groove of the first groove segment 213a can be improved, so as to further reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be further improved, so as to further improve the buffering effect of the second groove 214 between the first groove segment 213a and the second wall 212, thereby being able to further reduce the phenomenon that the region of the first wall 211 where the first groove 213 is arranged is deformed or damaged when the battery cell 20 is subjected to internal and external impact forces.

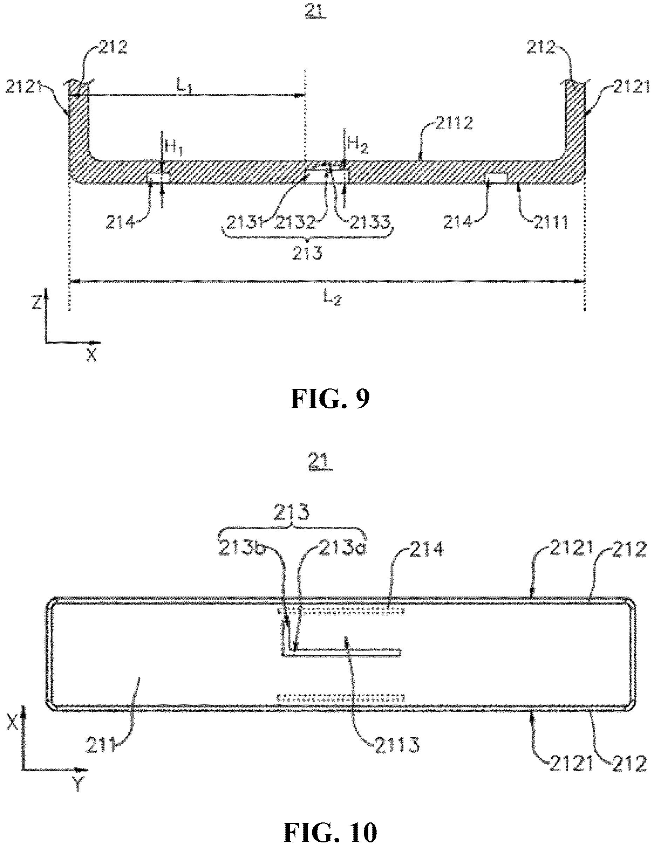

According to some embodiments of the present application, referring to FIG. 8 and FIG. 9, FIG. 8 is a bottom view of a shell 21 of a battery cell 20 provided by other embodiments of the present application. FIG. 9 is a partial section view of a shell 21 of a battery cell 20 provided by yet other embodiments of the present application. In the thickness direction Z of the first wall, the first wall 211 has the first surface 2111 and the second surface 2112 opposite to each other, and both the first groove 213 and the second groove 214 are arranged in the first surface 2111.

Both the first groove 213 and the second groove 214 are arranged in the first surface 2111, that is, the first groove 213 and the second groove 214 are arranged on the same side of the first wall 211 in the thickness direction Z of the first wall.

Exemplarily, in FIG. 9, the first surface 2111 is a surface of the first wall 211 facing away from the interior of the shell 21, that is, the first groove 213 and the second groove 214 are both arranged on the side of the first wall 211 facing away from the interior of the shell 21. Certainly, in other embodiments, the first surface 2111 may also be a surface of the first wall 211 facing the interior of the shell 21, that is, the first groove 213 and the second groove 214 are both arranged on the side of the first wall 211 facing the interior of the shell 21.

In the present embodiment, by arranging both the first groove 213 and the second groove 214 in the first surface 2111 of the first wall 211, the first groove 213 and the second groove 214 are located on the same side of the first wall 211, so that both the first groove 213 and the second groove 214 are structures fabricated on the same side of the first wall 211. On the one hand, it is convenient to realize the mutual spacing and avoidance between the first groove 213 and the second groove 214 during the fabrication, which is beneficial to reducing the difficulty of fabricating the first groove 213 and the second groove 214 in the first wall 211. On the other hand, the fabrication of the first groove 213 and the second groove 214 can be realized without flipping the first wall 211, which is beneficial to optimizing the production takt of the battery cell 20.

According to some embodiments of the present application, referring to FIG. 9, the first groove 213 is a multi-level groove arranged in sequence along the direction from the first surface 2111 to the second surface 2112, and along the thickness direction Z of the first wall, in two adjacent grooves, the first-level groove away from the first surface 2111 is arranged on the groove bottom surface of the first-level groove close to the first surface 2111. The groove arranged in the first surface 2111 in the multi-stage groove is the first-stage groove 2131, and in the thickness direction Z of the first wall, the groove bottom surface of the first-stage groove 2131 is closer to the first surface 2111 than the groove bottom surface of the second groove 214.

The first groove 213 is a multi-stage groove arranged in sequence in the direction from the first surface 2111 to the second surface 2112, that is, the first groove 213 is of a stepped groove structure arranged on the first surface 2111.

The groove arranged in the first surface 2111 in the multi-stage groove is the first-stage groove 2131, namely, the groove, penetrating through the first surface 2111, in the multi-stage groove of the first groove 213 is the first-stage groove 2131. Exemplarily, in FIG. 9, the first groove 213 is a three-stage groove, including the first-stage groove 2131, a second-stage groove 2132 and a third-stage groove 2133 arranged in sequence. The first-stage groove 2131 is arranged in the first surface 2111. The second-stage groove 2132 is arranged in the groove bottom surface of the first-stage groove 2131. The third-stage groove 2133 is arranged in a groove bottom surface of the second-stage groove 2132. Certainly, in other embodiments, the first groove 213 may also be a two-stage groove, a four-stage groove, a five-stage groove, a six-stage groove or the like.

In the thickness direction Z of the first wall, the groove bottom surface of the first-stage groove 2131 is closer to the first surface 2111 than the groove bottom surface of the second groove 214. In other words, in the thickness direction Z of the first wall, the groove bottom surface of the first-stage groove 2131 of the first groove 213 is located between the first surface 2111 and the groove bottom surface of the second groove 214, namely, a groove depth of the second groove 214 is greater than a groove depth of the first-stage groove 2131.

It should be noted that the first groove 213 is the multi-stage groove, and correspondingly, the first groove segment 213a of the first groove 213 is also of a multi-stage groove structure.

In the present embodiment, by making, in the thickness direction Z of the first wall, the groove bottom surface of the first-stage groove 2131 closer to the first surface 2111 than the groove bottom surface of the second groove 214, the second groove 214 is a structure for covering the first-stage groove 2131 of the first groove segment 213a in the first direction X, thus, on the one hand, an absorbing effect of the second groove 214 on the extruded excess material during the forming process of fabricating the multi-stage groove of the first groove segment 213a can be improved, so as to reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be improved, so as to improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, referring to FIG. 9, the first groove 213 is a multi-level groove arranged in sequence along the direction from the first surface 2111 to the second surface 2112, and along the thickness direction Z of the first wall, in two adjacent grooves, the first-level groove away from the first surface 2111 is arranged on the groove bottom surface of the first-level groove close to the first surface 2111. The groove arranged in the first surface 2111 in the multi-stage groove is the first-stage groove 2131, in the thickness direction Z of the first wall, the maximum groove depth of the second groove 214 is H₁, and a maximum groove depth of the first-stage groove 2131 is H₂, satisfying H₁>H₂.

It needs to be noted that in an embodiment where the first groove 213 includes only one smooth groove segment, the maximum groove depth H₂ of the first-stage groove 2131 is a maximum depth of the first-stage groove 2131 on this groove segment. In an embodiment where the first groove 213 includes a plurality of smooth groove segments, the maximum groove depth H₂ of the first-stage groove 2131 is a maximum groove depth of the first-stage groove 2131 on a groove segment having the largest depth among the plurality of groove segments.

In the present embodiment, by setting the maximum groove depth of the second groove 214 to be greater than the maximum groove depth of the first-stage groove 2131 in the multi-stage groove of the first groove 213, the second groove 214 is a structure for covering the first-stage groove 2131 of the first groove segment 213a in the first direction X, thus, on the one hand, an absorbing effect of the second groove 214 on the extruded excess material during the forming process of fabricating the multi-stage groove of the first groove segment 213a can be improved, so as to reduce the phenomenon that the local size of the battery cell 20 is increased or the planeness of the first wall 211 is poor due to local extrusion during the fabrication of the first groove segment 213a of the first wall 211 of the shell 21; and on the other hand, the absorbing effect of the second groove 214 on the deformation energy of the battery cell 20 when the battery cell 20 is subjected to internal and external impact forces and deformed can be improved, so as to improve the buffering effect of the second groove 214 between the first groove segment 213a and the second wall 212, thereby being able to effectively reduce the phenomenon that the region of the first wall 211 where the first groove 213 is arranged is deformed or damaged when the battery cell 20 is subjected to internal and external impact forces.

According to some embodiments of the present application, referring to FIG. 6 and FIG. 9, the first surface 2111 is a surface of a side of the first wall 211 facing away from the interior of the shell 21. That is, the first surface 2111 is a surface, arranged facing away from the electrode assembly 22, of two surfaces of the first wall 211 in the thickness direction Z of the first wall.

In the present embodiment, by setting the first surface 2111 of the first wall 211 to be the surface of the side of the first wall 211 facing away from the interior of the shell 21, the first groove 213 is arranged on the side of the first wall 211 facing away from the interior of the shell 21, thereby facilitating the formation of the first groove 213 in the first wall 211 of the shell 21, which is beneficial to reducing the difficulty of fabricating the first groove 213 and improving the production efficiency of the battery cell 20.

According to some embodiments of the present application, referring to FIG. 5, FIG. 6, FIG. 8 and FIG. 9, the shell 21 of the battery cell 20 is of a cuboid structure. In the first direction X, the shell 21 has two second walls 212 opposite to each other in the first direction X, and the two second walls 212 are connected respectively to the two sides of the first wall 211. In the first direction X, the first groove segment 213a is located between the two second walls 212, and second grooves 214 are arranged between the first groove segment 213a and first outer surfaces 2121 of the two second walls 212.

The shell 21 has two second walls 212 arranged opposite to each other in the first direction X, and the two second walls 212 are respectively connected to two sides of the first wall 211. In other words, the two second walls 212 are connected respectively to the two ends of the first wall 211 in the first direction X, and the two second walls 212 are perpendicular to the first wall 211.

The second grooves 214 are arranged between the first groove segment 213a and the first outer surfaces 2121 of the two second walls 212, namely, the second grooves 214 are arranged on two sides of the first groove segment 213a in the first direction X, so that the first groove segment 213a is located between the two second grooves 214 in the first direction X.

In the present embodiment, the shell 21 has the two second walls 212 located on the two sides of the first wall 211 in the first direction X, and second grooves 214 are arranged between the two second walls 212 and the first groove segment 213a, so that the first groove segment 213a is located between the two second grooves 214 in the first direction X. On the one hand, the two second grooves 214 can absorb the excess material extruded from two sides during the forming process of the first groove segment 213a, so as to further reduce the phenomenon that the local size of the battery cell 20 is increased or the planeness of the first wall 211 is poor due to local extrusion during the fabrication of the first groove segment 213a of the first wall 211 of the shell 21. On the other hand, the two second grooves 214 can protect from two sides of the first groove segment 213a, so as to absorb the deformation energy transmitted from the two sides of the first groove segment 213a when the battery cell 20 is subjected to internal and external impact forces, thereby being able to further reduce the phenomenon that the region of the first wall 211 where the first groove 213 is arranged is deformed or damaged when the battery cell 20 is subjected to internal and external impact forces.

According to some embodiments of the present application, as shown in FIG. 5 and FIG. 8, the first wall 211 is of a rectangular structure, and the width direction of the first wall 211 and a thickness direction of the second wall 212 are both parallel to the first direction X.

The thickness direction of the second wall 212 is the first direction X, and the thickness direction of the second wall 212 is perpendicular to the thickness direction Z of the first wall. Correspondingly, the width direction of the first wall 211 is the first direction X, and a length direction of the first wall 211 is the second direction Y.

In the present embodiment, the first wall 211 is of the rectangular structure, so that the shell 21 of the battery cell 20 is of a cuboid structure, and the width direction of the first wall 211 and the thickness direction of the second wall 212 extend in the first direction X, so that the second groove 214 is located on one side of the first groove segment 213a in the width direction of the first wall 211, and the second groove 214 is arranged on a side, extremely prone to deforming or extremely prone to being affected by impact force, of the first groove segment 213a during the forming process of the first groove segment 213a, which is beneficial to improving the buffering and protection effect of the second groove 214 on the first groove segment 213a.

According to some embodiments of the present application, as shown in FIG. 5 and FIG. 8, in the thickness direction Z of the first wall, two ends of a projection of the second groove 214 in its extension direction respectively extend beyond two ends of a projection of the first groove segment 213a.

The two ends of the projection of the second groove 214 in its extension direction respectively extend beyond the two ends of the projection of the first groove segment 213a, namely, a size of the second groove 214 in its extension direction is greater than a size of the first groove segment 213a, and the two ends of the second groove 214 in its extension direction respectively extend beyond the two ends of the first groove segment 213a.

In the present embodiment, in the thickness direction Z of the first wall, by arranging the projection of the second groove 214 in its extension direction to extend respectively beyond the two ends of the projection of the first groove segment 213a, the second groove 214 is of a structure in which the two ends in its extension direction respectively exceed the two ends of the first groove segment 213a, thereby improving a separation effect of the second groove 214 between the first groove segment 213a and the second wall 212, so as to improve the absorbing effect of the second groove 214 on the extruded excess material during the forming process of the first groove segment 213a, and a blocking effect of the second groove 214 on the deformation energy of the battery cell 20 when the battery cell 20 is subjected to internal and external impact forces can be improved.

In some embodiments, please continue to refer to FIG. 5 and FIG. 8, the second groove 214 extends in a second direction Y, and in the second direction Y, two ends of the second groove 214 extend beyond the two ends of the first groove segment 213a respectively, and the first direction X, the second direction Y and the thickness direction Z of the first wall are perpendicular to one another.

Exemplarily, in FIG. 5 and FIG. 8, the second groove 214 and the first groove segment 213a are of linear structures extending in the second direction Y.

In the present embodiment, by arranging the second groove 214 to be of a structure extending in the second direction Y, it is beneficial to improving the regularity of the shape of the second groove 214, thereby reducing the difficulty of fabricating the second groove 214, and the second groove 214 is conveniently arranged to be of a structure in which the two ends in the second direction Y respectively exceed the two ends of the first groove segment 213a, so as to reduce the difficulty of manufacturing the battery cell 20, which is beneficial to improving the production efficiency of the battery cell 20.

According to some embodiments of the present application, referring to FIG. 10, FIG. 10 is a bottom view of a shell 21 of a battery cell 20 provided by further embodiments of the present application. The first groove 213 may further include a second groove segment 213b, the first groove segment 213a is connected to the second groove segment 213b, the first groove segment 213a and the second groove segment 213b jointly define a predetermined pressure relief region 2113, and the predetermined pressure relief region 2113 is configured to be opened when the first wall 211 ruptures along at least a part of the first groove 213 to release the internal pressure of the battery cell 20.

The first groove segment 213a and the second groove segment 213b jointly define the predetermined pressure relief region 2113, namely, the first groove segment 213a and the second groove segment 213b are structures arranged along an edge of the predetermined pressure relief region 2113, so that a trajectory of arranging the first groove 213 is arranged along the edge of the predetermined pressure relief region 2113.

The predetermined pressure relief area 2113 is configured to be able to be opened when the first wall 211 ruptures along at least a part of the first groove 213, that is, when the battery cell 20 undergoes thermal runaway and releases the internal pressure, regions of a wall portion where the first groove segment 213a and the second groove segment 213b are arranged can rupture, so that the predetermined pressure relief region 2113 can be opened to release the internal pressure of the battery cell 20.

Exemplarily, in FIG. 10, one end of the first groove segment 213a is connected to one end of the second groove segment 213b, and the second groove segment 213b extends in the first direction X, so that the first groove segment 213a and the second groove segment 213b form the first groove 213 of an "L"-shaped structure. Certainly, in other embodiments, one end of the first groove segment 213a may also be connected to a middle position of the second groove segment 213b, referring to FIG. 5, the predetermined pressure relief regions 2113 are formed on two sides of the first groove segment 213a of the wall portion.

It should be noted that in an embodiment where the first groove 213 is the multi-stage groove, both the first groove segment 213a and the second groove segment 213b are of a multi-stage groove structure.

In the present embodiment, the first groove 213 also has the second groove segment 213b, and the second groove segment 213b and the first groove segment 213a are interconnected, so that the first groove segment 213a and the second groove segment 213b jointly define the predetermined pressure relief region 2113. On the one hand, a pressure relief area of the battery cell 20 can be increased, so a pressure relief rate of the battery cell 20 is increased. On the other hand, a position where the first groove segment 213a and the second groove segment 213b are interconnected is weaker, which is easier to rupture and open the predetermined pressure relief region 2113 so as to release the internal pressure of the battery cell 20.

According to some embodiments of the present application, as shown in FIG. 5 and FIG. 8, the first groove 213 may further include the second groove segment 213b and a third groove segment 213c, the second groove segment 213b and the third groove segment 213c are arranged opposite to each other in the second direction Y, and the second direction Y is perpendicular to the first direction X. The first groove segment 213a is connected to the second groove segment 213b and the third groove segment 213c, and the first groove segment 213a, the second groove segment 213b and the third groove segment 213c jointly define a predetermined pressure relief region 2113, and the predetermined pressure relief region 2113 is configured to be opened and flipped around the second groove 214 when the first wall 211 ruptures along the first groove 213 so as to release the internal pressure of the battery cell 20.

The second groove segment 213b and the third groove segment 213c are arranged opposite to each other in the second direction Y, namely, the second groove segment 213b and the third groove segment 213c are arranged at intervals in the second direction Y. Exemplarily, in FIG. 5 and FIG. 8, both the second groove segment 213b and the third groove segment 213c extend in the first direction X.

The first groove segment 213a is connected to the second groove segment 213b and the third groove segment 213c, namely, the first groove segment 213a is located between the second groove segment 213b and the third groove segment 213c, and the two ends of the first groove segment 213a are connected respectively to the second groove segment 213b and the third groove segment 213c. Certainly, in other embodiments, the two ends of the first groove segment 213a in the second direction Y may also extend beyond the second groove segment 213b and the third groove segment 213c respectively.

The first groove segment 213a, the second groove segment 213b and the third groove segment 213c jointly define the predetermined pressure relief region 2113, namely, at least one predetermined pressure relief region 2113 can be defined by the first groove segment 213a, the second groove segment 213b and the third groove segment 213c on the first wall 211, the first groove segment 213a, the second groove segment 213b and the third groove segment 213c are structures arranged along the edge of the predetermined pressure relief region 2113, so that the predetermined pressure relief region 2113 can be opened by using the first groove segment 213a, the second groove segment 213b and the third groove segment 213c as a boundary, in other words, the predetermined pressure relief region 2113 is formed in a region defined by the first groove segment 213a, the second groove segment 213b and the third groove segment 213c, so that a portion of the first wall 211 located in the predetermined pressure relief region 2113 can be opened by using the first groove segment 213a, the second groove segment 213b and the third groove segment 213c as the boundary during pressure relief of the battery cell 20, and thus, the internal pressure of the battery cell 20 is released.

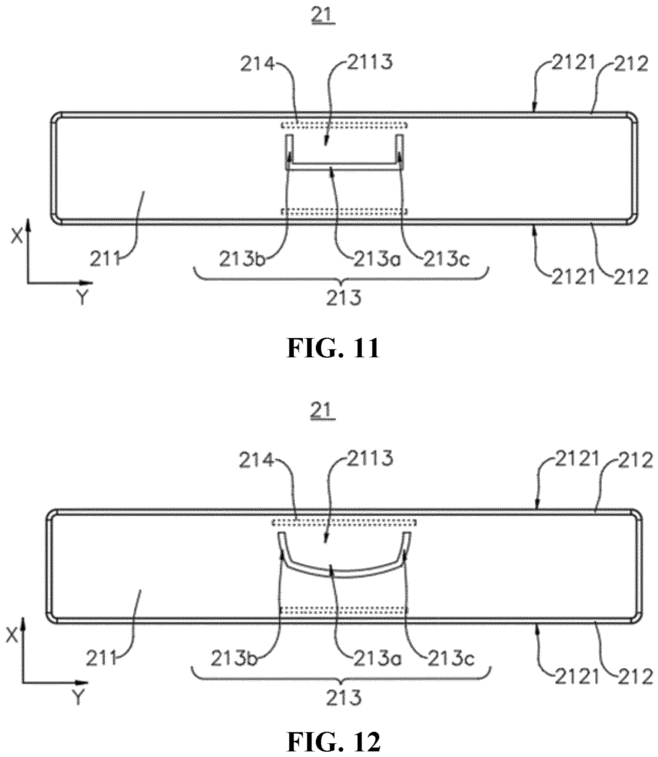

Optionally, referring to FIG. 5 and FIG. 8, a shape of the first groove 213 formed jointly by the first groove segment 213a, the second groove segment 213b and the third groove segment 213c may be of an "H"-shaped structure, so that the two predetermined pressure relief regions 2113 are formed on the first wall 211 and are located respectively on the two sides of the first groove segment 213a in the first direction X. Certainly, the first groove 213 may also be of other structures, referring to FIG. 11. FIG. 11 is a bottom view of a shell 21 of a battery cell 20 provided by some other embodiments of the present application. The shape of the first groove 213 formed jointly by the first groove segment 213a, the second groove segment 213b and the third groove segment 213c may be of a "U"-shaped structure, that is, one end of the first groove segment 213a is connected to one end of the second groove segment 213b, and the other end of the first groove segment is connected to one end of the third groove segment 213c, so as to form a predetermined pressure relief region 2113 on the first wall 211.

It should be noted that in an embodiment where the first groove 213 is a multi-stage groove, each of the first groove segment 213a, the second groove segment 213b and the third groove segment 213c is of a multi-stage groove structure.

In the present embodiment, the first groove 213 also includes the third groove segment 213c arranged opposite to the second groove segment 213b in the second direction, and the first groove segment 213a is connected to the second groove segment 213b and the third groove segment 213c, so that the first wall 211 can rupture along the first groove segment 213a, the second groove segment 213b and the third groove segment 213c during pressure relief of the battery cell 20, so as to open the predetermined pressure relief region 2113 to release the internal pressure of the battery cell 20. The first groove 213 of such structure makes an intersection position of the first groove segment 213a and the second groove segment 213b and a connection position of the first groove segment 213a and the third groove segment 213c weaker, which is easier to rupture and open the predetermined pressure relief region 2113 for pressure relief, and the pressure relief area and pressure relief rate of the battery cell 20 can be further improved. In addition, since the second groove 214 and the first groove segment 213a are arranged in the first direction X, the predetermined pressure relief region 2113 defined by the first groove segment 213a, the second groove segment 213b and the third groove segment 213c can also be flipped around the second groove 214 used as an axis when opened, which is beneficial to improving an effect and degree of opening the predetermined pressure relief region 2113, so as to further improve the pressure relief effect of the battery cell 20.

In some embodiments, referring to FIG. 5 and FIG. 8, a connection position between the second groove segment 213b and the first groove segment 213a deviates from the two ends of the second groove segment 213b, and the connection position between the third groove segment 213c and the first groove segment 213a deviates from the two ends of the third groove segment 213c, so that the predetermined pressure relief regions 2113 are formed on the two sides of the first groove segment 213a.

The connection position between the second groove segment 213b and the first groove segment 213a deviates from the two ends of the second groove segment 213b, in other words, the first groove segment 213a is connected to a position between the two ends of the second groove segment 213b. Similarly, the connection position between the third groove segment 213c and the first groove segment 213a deviates from the two ends of the third groove segment 213c, in other words, the first groove segment 213a is connected to a position between the two ends of the third groove segment 213c, so that the shape of the first groove 213 formed jointly by the first groove segment 213a, the second groove segment 213b and the third groove segment 213c is approximately of an "H"-shaped structure.

In the present embodiment, by setting the connection position between the second groove segment 213b and the first groove segment 213a to be located between the two ends of the second groove segment 213b, and setting the connection position between the third groove segment 213c and the first groove segment 213a to be located between the two ends of the third groove segment 213c, so that the first groove segment 213a, the second slot segment 213b and the third groove segment 213c form a structure similar to a shape "H", the predetermined pressure relief regions 2113 can be formed on the two sides of the first groove segment 213a of the first groove 213, and the two predetermined pressure relief regions 2113 can be opened in a split manner for pressure relief during pressure relief of the battery cell 20, which is beneficial to further increasing the pressure relief effect of the battery cell 20 and can effectively improve the pressure relief rate of the battery cell 20.

In some embodiments, please continue to refer to FIG. 5 and FIG. 8, the first groove segment 213a, the second groove segment 213b and the third groove segment 213c extend along a linear trajectory, and the second groove segment 213b and the third groove segment 213c are perpendicular to the first groove segment 213a. That is to say, the extension direction of the first groove segment 213a is perpendicular to the extension direction of the second groove segment 213b and the extension direction of the third groove segment 213c, so that the shape of the first groove 213 formed jointly by the first groove segment 213a, the second groove segment 213b and the third groove segment 213c is a regular "H"-shaped structure, and the predetermined pressure relief regions 2113 are formed on the two sides of the first groove segment 213a. Certainly, the areas of the two predetermined pressure relief regions 2113 may be the same or not.

Exemplarily, the first groove segment 213a is of a linear structure extending in the second direction Y, both the second groove segment 213b and the third groove segment 213c are of a linear structure extending in the first direction X, and the first groove segment 213a is located between the second groove segment 213b and the third groove segment 213c in the second direction Y.

In the present embodiment, by setting the second groove segment 213b and the third groove segment 213c to be perpendicular to the first groove segment 213a, so that an extension direction of the first groove segment 213a is an arrangement direction of the second groove segment 213b and the third groove segment 213c, on the one hand, the regularity of the shape of the first groove 213 can be improved, which is conducive to reducing the fabrication difficulty of the first groove 213, so as to reduce the manufacturing cost of the battery cell 20; and on the other hand, it is convenient for the two predetermined pressure relief regions 2113 on the first wall 211 located on the two sides of the first groove segment 213a to release pressure in opposite directions during pressure relief of the battery cell 20.

According to some embodiments of the present application, referring to FIG. 12, FIG. 12 is a bottom view of a shell 21 of a battery cell 20 provided by further yet other embodiments of the present application. The first groove segment 213a, the second groove segment 213b and the third groove segment 213c extend along the arc-shaped trajectory.

Exemplarily, in FIG. 12, two ends of the first groove segment 213a are respectively connected to one end of the second groove segment 213b and one end of the third groove segment 213c, and the first groove segment 213a, the second groove segment 213b and the third groove segment 213c extend along the arc-shaped trajectory so that the first groove segment 213a, the second groove segment 213b and the third groove segment 213c form a first groove 213 similar to a "C"-shaped structure.

In the present embodiment, by setting the first groove segment 213a, the second groove segment 213b and the third groove segment 213c to be of structures extending along the arc-shaped trajectory, it is beneficial to improving an arc degree of the connection position of the first groove segment 213a and the second groove segment 213b and improving an arc degree of the connection position of the first groove segment 213a and the third groove segment 213c. On the one hand, the difficulty of fabricating the first groove 213 can be reduced, and on the other hand, the first wall 211 can conveniently rupture along the first groove segment 213a, the second groove segment 213b and the third groove segment 213c to open the predetermined pressure relief region 2113 so as to release the internal pressure of the battery cell 20.

According to some embodiments of the present application, referring to FIG. 5 and FIG. 8, the first groove 213 may further include a fourth groove segment 213d, the fourth groove segment 213d is located between the second groove segment 213b and the third groove segment 213c, and the fourth groove segment 213d is connected to the first groove segment 213a.

Exemplarily, the fourth groove segment 213d extends in the first direction X and perpendicular to the first groove segment 213a.

Exemplarily, a distance between the fourth groove segment 213d and the second groove segment 213b in the second direction Y is equal to a distance between the fourth groove segment 213d and the third groove segment 213c in the second direction Y.

It should be noted that in an embodiment where the first groove 213 is the multi-stage groove, the fourth groove segment 213d is also of a multi-stage groove structure.

In the present embodiment, the first groove 213 is also provided with the fourth groove segment 213d located between the second groove segment 213b and the third groove segment 213c, and the fourth groove segment 213d is interconnected with the first groove segment 213a, so that the stress at a position where the fourth groove segment 213d and the first groove segment 213a are interconnected is more concentrated and easier to implement rupturing, so the first wall 211 can rupture along the first groove segment 213a from a position where the first groove segment 213a and the fourth groove segment 213d intersect, and rupture along the second groove segment 213b and the third groove segment 213c after the first groove segment 213a ruptures, so as to achieve rapid pressure relief of the battery cell 20.

According to some embodiments of the present application, referring to FIG. 5 and FIG. 8, in the thickness direction Z of the first wall, the projection of the first groove 213 does not overlap with the projection of the second groove 214. That is to say, the first groove 213 and the second groove 214 do not make contact with each other, so that the first groove 213 and the second groove 214 does not communicate. The first groove 213 and the second groove 214 may be disposed at intervals in the first direction X, or may be disposed at intervals in the thickness direction Z of the first wall.

In the present embodiment, by arranging the first groove 213 and the second groove 214 to be of structures in which the projection of the first groove does not overlap with the projection of the second groove in the thickness direction Z of the first wall, so that the first groove 213 and the second groove 214 do not make contact with each other. On the one hand, the mutual influence between the first groove 213 and the second groove 214 during the fabrication can be reduced; and on the other hand, the phenomenon of the first wall 211 rupturing along the second groove 214 when the first wall 211 ruptures along the first groove 213 to release pressure can be reduced, and the stress influence between the region of the first wall 211 where the first groove 213 is arranged and a region of the first wall 211 where the second groove 214 is arranged can be reduced.

In some embodiments, please continue to refer to FIG. 5 and FIG. 8, in the first direction X, the second groove 214 and the first groove 213 are disposed at intervals.

Exemplarily, the second groove 214 and the second groove segment 213b and the third groove segment 213c are disposed at intervals in the first direction X, and the second groove 214 and the first groove segment 213a are parallel to each other.

In the present embodiment, by arranging the second groove 214 and the second groove segment 213b and the third groove segment 213c of the first groove 213 at intervals in the first direction X, so that the predetermined pressure relief region 2113 defined by the first groove segment 213a, the second groove segment 213b and the third groove segment 213c can be flipped around the region of the first wall 211 where the second groove 214 is arranged when opened, and a flipping angle of the predetermined pressure relief region 2113 after being opened can be increased, so as to increase the pressure relief area of the battery cell 20.

In some embodiments, the first groove 213 is formed in the first wall 211 in a stamping manner.

It should be noted that if the first groove 213 is a one-stage groove structure, when the first groove 213 is formed on the first wall 211, the first wall 211 may be stamped once to form the first groove 213 in the first wall 211; and if the first groove 213 is a multi-stage groove structure, when the first groove 213 is formed on the first wall 211, the first wall 211 can be stamped multiple times to form one stage of groove each time, and the first groove 213 is finally formed after multiple stampings.

In the present embodiment, by forming the first groove 213 in the first wall 211 in a stamping manner, so that the forming method of the first groove 213 is simple, which is beneficial to reducing the production cost of the battery cell 20.

In some embodiments, the second groove 214 is formed in the first wall 211 in a stamping manner.

In the present embodiment, by forming the second groove 214 in the first wall 211 in a stamping manner, so that the forming method of the second groove 214 is simple, which is beneficial to reducing the production cost of the battery cell 20.

According to some embodiments of the present application, referring to FIG. 3, FIG. 4, FIG. 5 and FIG. 6, the shell 21 may include a shell body 215 and an end cover 216. An accommodating cavity having an opening 2151 is formed inside the shell body 215, and the accommodating cavity is configured to accommodate an electrode assembly 22. The end cover 216 closes the opening 2151. The shell body 215 includes the first wall 211.

The shell body 215 includes a side wall and a bottom wall which are integrally formed, namely, the shell body 215 is fabricated through an integrated forming process, for example, stamping, casting or extrusion molding and other integrated forming processes, in other words, the side wall and the bottom wall of the shell body 215 are of an integrated structure.

The shell body 215 includes a first wall 211, that is, the first wall 211 is a wall of the shell body 215. Exemplarily, in FIG. 5 and FIG. 6, the first wall 211 is the bottom wall of the shell body 215 arranged opposite to the end cover 216 in the thickness direction Z of the first wall. Correspondingly, the second wall 212 is one of the side walls of the shell body 215, that is, both the first groove 213 and the second groove 214 are arranged in the bottom wall of the shell body 215. Certainly, in other embodiments, the first wall 211 may also be a side wall of the shell body 215.

In the present embodiment, by arranging the first wall 211 of the shell 21 as a wall of the shell body 215, the battery cell 20 adopting this structure can make a region of the shell 21 where the first groove 213 and the second groove 214 are arranged be away from the end cover 216, thereby effectively alleviating a phenomenon that the stress generated by the connection between the end cover 216 and the shell body 215 acts on the region where the first groove 213 and the second groove 214 are arranged, so as to reduce the impact on the region of the first wall 211 where the first groove 213 and the second groove 214 are arranged, and further help to reduce the risk of rupturing or structural strength reduction in the region of the first wall 211 where the first groove 213 and the second groove 214 are arranged under the pulling action of stress, so as to prolong the service life of the battery cell and improve use reliability of the battery cell 20.

It should be noted that the structure of the battery cell 20 is not limited thereto. In some embodiments, the battery cell 20 may be of other structures. For example, the shell 21 may include the shell body 215 and the end cover 216. The accommodating cavity having the opening 2151 is formed inside the shell body 215, and the accommodating cavity is configured to accommodate the electrode assembly 22. The end cover 216 closes the opening 2151, and the end cover 216 is the first wall 211. That is, both the second groove 214 and the first groove 213 are arranged in the end cover 216 of the shell 21, and correspondingly, the second wall 212 is one of the side walls of the shell body 215.

In the present embodiment, by arranging the first wall 211 of the shell 21 to be the end cover 216, for closing the opening 2151, of the shell 21, for the battery cell 20 of such structure, the first groove 213 and the second groove 214 are conveniently arranged in the end cover 216, which is beneficial to reducing the difficulty of manufacturing the battery cell 20, so as to improve the production efficiency of the battery cell 20.

It should be noted that there may be a variety of structures for the battery cell 20. In some embodiments, the shell 21 may include the shell body 215 and two end covers 216. The accommodating cavity is formed inside the shell body 215 and configured to accommodate the electrode assembly 22. The openings 2151 are formed in two opposite ends of the shell body 215 and communicate with the accommodating cavity. The two end covers 216 respectively close the two openings 2151. One end cover 216 of the two end covers 216 is the first wall 211.

In the present embodiment, the openings 2151 are arranged in the two opposite ends of the shell body 215 of the shell 21, the two end covers 216 respectively close the two openings 2151, the first wall 211 is one of the two end covers 216, for the battery cell 20 of such structure, the battery cell 20 is conveniently assembled from the two ends of the shell body 215, the difficulty of manufacturing and assembling the battery cell 20 is better reduced, the first groove 213 and the second groove 214 are conveniently arranged in the end covers 216, and the difficulty of manufacturing the battery cell 20 is better reduced, so as to improve the production efficiency of the battery cell 20.

Certainly, the structure of the battery cell 20 is not limited thereto. In the embodiment where the shell 21 includes the shell body 215 and the two end covers 216, the shell body 215 may also include the first wall 211, that is, the first wall 211 is a wall in the shell body 215. By arranging the first wall 211 of the shell 21 to be one wall of the shell body 215, for the battery cell 20 of such structure, a region of the shell 21 where the first groove 213 and the second groove 214 are arranged can be made to be away from the end cover 216, thereby effectively alleviating the phenomenon that the stress generated by the connection between the end cover 216 and the shell body 215 acts on the region where the first groove 213 and the second groove 214 are arranged, so as to reduce the impact on the region of the first wall 211 where the first groove 213 and the second groove 214 are arranged, and further help to reduce the risk of rupturing or structural strength reduction in the region of the first wall 211 where the first groove 213 and the second groove 214 are arranged under the pulling action of stress, so as to prolong the service life of the battery cell 20 and improve use reliability of the battery cell.

According to some embodiments of the present application, the material of the first wall 211 includes a steel material.

Exemplarily, the material of the first wall 211 may be carbon steel, alloy steel, stainless steel or the like.

It should be noted that the material of the first wall 211 includes the steel material. If the first wall 211 is the end cover 216 of the shell 21, the material of the end cover 216 is the steel material. If the first wall 211 is a wall in the shell body 215, the material of the shell body 215 is the steel material.

In the present embodiment, by setting the material of the first wall 211 to be the steel material, due to the characteristic of high strength of steel, the first wall 211 made of steel has better strength, so that when the bursting pressure of the battery cell 20 is constant, the first wall 211 may be made thinner, which is beneficial to saving the space occupied by the first wall 211.

In some embodiments, the steel material is carbon steel or stainless steel.

Exemplarily, the carbon steel may be low carbon steel, medium carbon steel or high carbon steel.

In the present embodiment, the carbon steel or stainless steel is used as the material of the first wall 211, so cost is low and manufacturing is easy.

According to some embodiments of the present application, the material of the first wall 211 includes an aluminum alloy.

It needs to be noted that the material of the first wall 211 includes the aluminum alloy. If the first wall 211 is the end cover 216 of the shell 21, the material of the end cover 216 is the aluminum alloy. If the first wall 211 is a wall in the shell body 215, the material of the shell body 215 is the aluminum alloy.

In the present embodiment, by setting the material of the first wall 211 to be the aluminum alloy, due to the characteristics of aluminum alloy having light weight and good ductility, it is easier to fabricate the first groove 213 and the second groove 214 in the first wall 211, which is beneficial to reducing the manufacturing difficulty of the first groove 213 and the second groove 214.

In some embodiments, the aluminum alloy includes components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

In the present embodiment, this type of aluminum alloy belongs to 3xxx series aluminum, this type of aluminum alloy has lower hardness and better forming capability, which can further reduce the difficulty of fabricating the first groove 213 and the second groove 214 and can improve the machining accuracy of the first groove 213 and the second groove 214, which is beneficial to improving the pressure relief consistency of the battery cell 20.

In some embodiments, the aluminum alloy includes components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%.

In the present embodiment, this type of aluminum alloy belongs to 5xxx series aluminum. The first wall 211 made of this type of aluminum alloy has higher hardness and greater strength, so that the first wall 211 has good anti-destruction ability.

According to some embodiments of the present application, the present application further provides a battery 100, and the battery 100 includes the battery cell 20 according to any one of the above solutions.

Referring to FIG. 2, the battery 100 may further include a box 10, and the battery cell 20 is accommodated in the box 10.

In some embodiments, the box 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder or a cuboid. Exemplarily, in FIG. 2, the box 10 is of a cuboid structure.

Optionally, one battery cell 20 or a plurality of battery cells 20 may be arranged in the box 10. Exemplarily, in FIG. 2, a plurality of battery cells 20 are arranged in the box 10 of the battery 100, and the plurality of battery cells 20 may be connected in series, parallel or parallel-series connection, where the parallel-series connection means that some of the plurality of battery cells 20 are connected in series and some are connected in parallel. The plurality of battery cells 20 may be directly connected in series, parallel or parallel-series connection together, and then, the whole formed by the plurality of battery cells 20 is accommodated in the box 10. Of course, the battery 100 may also be in the form of a battery module composed of a plurality of battery cells 20 in series, parallel or parallel-series connection first, and then, a plurality of battery modules are connected in series, parallel or parallel-series connection to form a whole which is accommodated in the box 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box 10 may be used as a part of the electrical apparatus. The electrical apparatus is, for example, a vehicle 1000, and the box 10 may be used as a part of a chassis structure of the vehicle 1000. For example, a part of the box 10 may become at least a part of a floor of the vehicle 1000, or a part of the box 10 may become at least a part of a cross beam and a longitudinal beam of the vehicle 1000.

According to some embodiments of the present application, the present application further provides an electrical apparatus, the electrical apparatus includes a battery cell 20 according to any one of the above solutions, and the battery cell 20 is configured to provide electric energy to the electrical apparatus.

The electrical apparatus may be any one of the above devices or systems applying the battery cell 20.

According to some embodiments of the present application, referring to FIG. 3 to FIG. 7, the present application provides a battery cell 20. The battery cell 20 includes a shell 21 and an electrode assembly 22. The shell 21 is of a cuboid structure and includes a shell body 215 and an end cover 216. An accommodating cavity having an opening 2151 is formed inside the shell body 215. The electrode assembly 22 is accommodated in the accommodating cavity. The end cover 216 closes the opening 2151. The shell body 215 includes a bottom wall and a side wall arranged around the bottom wall. One end of the side wall in a thickness direction Z of the first wall is connected to the bottom wall, and the other end of the side wall defines the opening 2151. The bottom wall of the shell body 215 is the first wall 211, and the two side walls of two sides of the shell body 215 connected to the first wall 211 in the first direction X are the second walls 212. A width direction of the first wall 211 and the thickness direction of the second wall 212 are both the first direction X, and a length direction of the first wall 211 is the second direction Y. The first direction X, the second direction Y and the thickness direction Z of the first wall are perpendicular to one another. The first wall 211 is provided with a first groove 213. The first wall 211 is configured to be capable of rupturing along at least part of the first groove 213 during pressure relief of the battery cell 20 to release the internal pressure of the battery cell 20. The first groove 213 includes a first groove segment 213a, a second groove segment 213b and a third groove segment 213c. The first groove segment 213a extends in the second direction Y, and the first groove segment 213a is located between the two second walls 212 in the first direction X. The second groove segment 213b and the third groove segment 213c are arranged at intervals in the second direction Y and extend in the first direction X. The two ends of the first groove segment 213a are respectively connected to the second groove segment 213b and the third groove segment 213c. The connection position between the second groove segment 213b and the first groove segment 213a deviates from the two ends of the second groove segment 213b. The connection position between the third groove segment 213c and the first groove segment 213a deviates from the two ends of the third groove segment 213c, so that predetermined pressure relief regions 2113 are formed on two sides of the first groove segment 213a. The first wall 211 is also provided with two second grooves 214. In the first direction X, the second wall 212 has a first outer surface 2121 facing away from the interior of the shell 21. The second grooves 214 are arranged between the first groove segment 213a and the first outer surfaces 2121 of the two second walls 212. The second grooves 214 extend in the second direction Y, and a projection of the second groove 214 in the thickness direction Z of the first wall is located between a projection of the first groove segment 213a in the thickness direction Z of the first wall and the first outer surface 2121. The predetermined pressure relief region 2113 is configured to be able to be opened and flipped around the second groove 214 when the first wall 211 ruptures along the first groove 213 to release the internal pressure of the battery cell 20. In the first direction X, the first groove 213 is located between the two second grooves 214, and the two second grooves 214 and the first groove 213 are disposed at intervals. In the first direction X, a minimum distance between the first groove segment 213a and the first outer surface 2121 is L₁, and a size of the battery cell 20 is L₂, satisfying 0.11≤L₁/L₂≤0.44, 10 mm≤L₁≤44 mm, 25 mm≤L₂≤100 mm, preferably, 0.15≤L₁/L₂≤0.4. In the thickness direction Z of the first wall, a minimum residual thickness of the first groove 213 is D₁, and a minimum residual thickness of the second groove 214 is D₂, satisfying D₂>D₁. The first wall 211 has a first surface 2111 and a second surface 2112 opposite to each other. The first surface 2111 is a surface of a side of the first wall 211 facing away from the interior of the shell 21. The first groove 213 is arranged in the first surface 2111, and the second groove 214 is arranged in the second surface 2112. Th first groove 213 is a multi-stage groove arranged in sequence in a direction from the first surface 2111 to the second surface 2112. In the thickness direction Z of the first wall, in two adjacent stages of grooves, one stage of groove away from the first surface 2111 is arranged in a groove bottom surface of one stage of groove close to the first surface 2111, a groove arranged in the first surface 2111 in the multi-stage groove is a first-stage groove 2131, a maximum groove depth of the second groove 214 is H₁, and a minimum residual thickness of the first-stage groove 2131 is D₃, satisfying H₁≥D₃.

It should be noted that in the case of no conflict, the embodiments in the present application and the features in the embodiments may be combined with each other.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
a shell, wherein the shell has a first wall and a second wall connected to each other, the first wall is provided with a first groove, the first wall is configured to be capable of rupturing along at least a part of the first groove during pressure relief of the battery cell, so as to release an internal pressure of the battery cell, the second wall is located on one side of the first wall in a first direction, the first groove comprises a first groove segment, and the first groove segment and the second wall are arranged in the first direction;
wherein the first wall is also provided with a second groove, in the first direction, the second wall has a first outer surface facing away from an interior of the shell, a projection of the second groove in a thickness direction of the first wall is located between the first outer surface and a projection of the first groove segment in the thickness direction of the first wall, and the first direction is perpendicular to the thickness direction of the first wall.

2. The battery cell according to claim 1, wherein in the first direction, a minimum distance L₁ between the first groove segment and the first outer surface is greater than or equal to 0.11 times a size L₂ of the battery cell, and the minimum distance L₁ between the first groove segment and the first outer surface is less than or equal to 0.44 times the size L₂ of the battery cell.

3. The battery cell according to claim 2, wherein in the first direction, the minimum distance L₁ between the first groove segment and the first outer surface is greater than or equal to 0.15 times the size L₂ of the battery cell, and the minimum distance L₁ between the first groove segment and the first outer surface is less than or equal to 0.4 times the size L₂ of the battery cell.

4. The battery cell according to any one of claims 1 to 3, wherein in the first direction, the minimum distance between the first groove segment and the first outer surface is L₁, satisfying 10 mm≤L₁≤44 mm.

5. The battery cell according to any one of claims 1 to 4, wherein in the first direction, the size of the battery cell is L₂, satisfying 25 mm≤L₂≤100 mm.

6. The battery cell according to any one of claims 1 to 5, wherein in the thickness direction of the first wall, a minimum residual thickness of the first groove is D₁, and a minimum residual thickness of the second groove is D₂, satisfying D₂>D₁.

7. The battery cell according to any one of claims 1 to 6, wherein in the thickness direction of the first wall, the first wall has a first surface and a second surface opposite to each other;
wherein the first groove is arranged in the first surface, and the second groove is arranged in the second surface.

8. The battery cell according to claim 7, wherein in the first direction, a projection of the first groove at least partially overlaps with a projection of the second groove.

9. The battery cell according to claim 7 or 8, wherein in the thickness direction of the first wall, a groove bottom surface of the second groove is closer to the first surface than a groove bottom surface of the first groove.

10. The battery cell according to any one of claims 7 to 9, wherein in the thickness direction of the first wall, a maximum groove depth of the second groove is H₁, and a minimum residual thickness of the first groove is D₁, satisfying H₁>D₁.

11. The battery cell according to any one of claims 7 to 10, wherein the first groove is a multi-stage groove arranged in sequence in a direction from the first surface to the second surface, and in the thickness direction of the first wall, in two adjacent stages of grooves, one stage of groove away from the first surface is arranged in a groove bottom surface of one stage of groove close to the first surface;
wherein a groove arranged in the first surface in the multi-stage groove is a first-stage groove, and in the first direction, a projection of the second groove at least partially overlaps with a projection of the first-stage groove.

12. The battery cell according to any one of claims 7 to 11, wherein the first groove is the multi-stage groove arranged in sequence in the direction from the first surface to the second surface, and in the thickness direction of the first wall, in two adjacent stages of grooves, one stage of groove away from the first surface is arranged in the groove bottom surface of one stage of groove close to the first surface;
wherein the groove arranged in the first surface in the multi-stage groove is the first-stage groove, and in the thickness direction of the first wall, the groove bottom surface of the second groove is flush with a groove bottom surface of the first-stage groove or the groove bottom surface of the second groove is closer to the first surface than the groove bottom surface of the first-stage groove.

13. The battery cell according to any one of claims 7 to 12, wherein the first groove is the multi-stage groove arranged in sequence in the direction from the first surface to the second surface, and in the thickness direction of the first wall, in two adjacent stages of grooves, one stage of groove away from the first surface is arranged in the groove bottom surface of one stage of groove close to the first surface;
wherein the groove arranged in the first surface in the multi-stage groove is the first-stage groove, the maximum groove depth of the second groove is H₁, and a minimum residual thickness of the first-stage groove is D₃, satisfying H₁≥D₃.

14. The battery cell according to any one of claims 1 to 6, wherein in the thickness direction of the first wall, the first wall has a first surface and a second surface opposite to each other;
wherein both the first groove and the second groove are arranged in the first surface.

15. The battery cell according to claim 14, wherein the first groove is a multi-stage groove arranged in sequence in a direction from the first surface to the second surface, and in the thickness direction of the first wall, in two adjacent stages of grooves, one stage of groove away from the first surface is arranged in a groove bottom surface of one stage of groove close to the first surface;
wherein a groove arranged in the first surface in the multi-stage groove is a first-stage groove, and in the thickness direction of the first wall, a groove bottom surface of the first-stage groove is closer to the first surface than a groove bottom surface of the second groove.

16. The battery cell according to claim 14 or 15, wherein the first groove is the multi-stage groove arranged in sequence in the direction from the first surface to the second surface, and in the thickness direction of the first wall, in two adjacent stages of grooves, one stage of groove away from the first surface is arranged in the groove bottom surface of one stage of groove close to the first surface;
wherein the groove arranged in the first surface in the multi-stage groove is the first-stage groove, in the thickness direction of the first wall, a maximum groove depth of the second groove is H₁, and a maximum groove depth of the first-stage groove is H₂, satisfying H₁>H₂.

17. The battery cell according to any one of claims 7 to 16, wherein the first surface is a surface of a side of the first wall facing away from the interior of the shell.

18. The battery cell according to any one of claims 1 to 17, wherein in the first direction, the shell has two second walls arranged opposite to each other in the first direction, and the two second walls are respectively connected to two sides of the first wall;
wherein in the first direction, the first groove segment is located between the two second walls, and second grooves are arranged between the first groove segment and the first outer surfaces of the two second walls.

19. The battery cell according to any one of claims 1 to 18, wherein the first wall is of a rectangular structure, and a width direction of the first wall and a thickness direction of the second wall are parallel to the first direction.

20. The battery cell according to any one of claims 1 to 19, wherein in the thickness direction of the first wall, two ends of a projection of the second groove in its extension direction respectively extend beyond two ends of a projection of the first groove segment.

21. The battery cell according to claim 20, wherein the second groove extends in a second direction, and in the second direction, two ends of the second groove extend beyond the two ends of the first groove segment respectively, and the first direction, the second direction and the thickness direction of the first wall are perpendicular to one another.

22. The battery cell according to any one of claims 1 to 21, wherein the first groove further comprises a second groove segment, the first groove segment is connected to the second groove segment, the first groove segment and the second groove segment jointly define a predetermined pressure relief region, and the predetermined pressure relief region is configured to be capable of being opened when the first wall ruptures along at least a part of the first groove to release the internal pressure of the battery cell.

23. The battery cell according to any one of claims 1 to 21, wherein the first groove further comprises a second groove segment and a third groove segment, the second groove segment and the third groove segment are arranged opposite to each other in the second direction, and the second direction is perpendicular to the first direction;
wherein the first groove segment is connected to the second groove segment and the third groove segment, and the first groove segment, the second groove segment and the third groove segment jointly define a predetermined pressure relief region, and the predetermined pressure relief region is configured to be capable of being opened and flipped around the second groove when the first wall ruptures along the first groove so as to release the internal pressure of the battery cell.

24. The battery cell according to claim 23, wherein a connection position between the second groove segment and the first groove segment deviates from the two ends of the second groove segment, and a connection position between the third groove segment and the first groove segment deviates from two ends of the third groove segment, so that the predetermined pressure relief regions are formed on two sides of the first groove segment.

25. The battery cell according to claim 24, wherein the first groove segment, the second groove segment and the third groove segment extend along a linear trajectory, and the second groove segment and the third groove segment are perpendicular to the first groove segment.

26. The battery cell according to claim 23, wherein the first groove segment, the second groove segment and the third groove segment extend along an arc-shaped trajectory.

27. The battery cell according to any one of claims 23 to 26, wherein the first groove further comprises a fourth groove segment, the fourth groove segment is located between the second groove segment and the third groove segment, and the fourth groove segment is connected to the first groove segment.

28. The battery cell according to any one of claims 1 to 27, wherein in the thickness direction of the first wall, the projection of the first groove does not overlap with the projection of the second groove.

29. The battery cell according to claim 28, wherein in the first direction, the second groove and the first groove are disposed at intervals.

30. The battery cell according to any one of claims 1 to 29, wherein the first groove is formed in the first wall in a stamping manner.

31. The battery cell according to any one of claims 1 to 30, wherein the second groove is formed in the first wall in a stamping manner.

32. The battery cell according to any one of claims 1 to 31, wherein the shell comprises:
a shell body, wherein an accommodating cavity having an opening is formed inside the shell body and configured to accommodate an electrode assembly; and
an end cover, closing the opening;
wherein the shell body comprises the first wall; or
the end cover is the first wall.

33. The battery cell according to any one of claims 1 to 31, wherein the shell comprises:
a shell body, wherein an accommodating cavity is formed inside the shell body and configured to accommodate an electrode assembly, and openings are formed in two opposite ends of the shell body, and the two openings communicate with the accommodating cavity; and
two end covers, respectively closing the two openings;
wherein one of the two end covers is the first wall; or
the shell body comprises the first wall.

34. The battery cell according to any one of claims 1 to 33, wherein a material of the first wall comprises a steel material.

35. The battery cell according to claim 34, wherein the steel material is carbon steel or stainless steel.

36. The battery cell according to any one of claims 1 to 33, wherein a material of the first wall comprises an aluminum alloy.

37. The battery cell according to claim 36, wherein the aluminum alloy comprises components at percentage mass contents of: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, and other individual elements≤0.03%.

38. The battery cell according to claim 36, wherein the aluminum alloy comprises components at percentage mass contents of: aluminum≥96.7%, 0.05%≤copper≤0.2%, iron≤0.7%, manganese≤1.5%, silicon≤0.6%, zinc≤0.1%, components of other individual elements≤0.05%, and total components of other elements≤0.15%.

39. A battery, comprising the battery cell according to any one of claims 1 to 38.

40. An electrical apparatus, comprising the battery cell according to any one of claims 1 to 38, wherein the battery cell is configured to provide electric energy.
